# EUROPÄISCHE PATENTSCHRIFT

(11) **EP 3 381 108 B1**
(45) Veröffentlichungstag und Bekanntmachung des Hinweises auf die Patenterteilung: **01.01.2020**
(21) Anmeldenummer: 16800986.8
(22) Anmeldetag: 24.11.2016
(51) Int. Cl.: H02K 15/04

(54) **VERFAHREN ZUR HERSTELLUNG EINER SPULENWICKLUNG ZUM EINLEGEN IN RADIAL OFFENE NUTEN VON STATOREN ODER ROTOREN VON ELEKTROMASCHINEN**
METHOD FOR PRODUCING A COIL WINDING FOR INSERTING INTO RADIALLY OPEN GROOVES OF STATORS OR ROTORS OF ELECTRIC MACHINES
PROCÉDÉ DE FABRICATION D'UN ENROULEMENT DE BOBINE À DÉPOSER DANS DES GORGES RADIALEMENT OUVERTES DE STATORS ET DE ROTORS DE MACHINES ÉLECTRIQUES

(30) Priorität: 27.11.2015 DE 102015120661
(43) Veröffentlichungstag der Anmeldung: 03.10.2018
(73) Patentinhaber: Elmotec Statomat Vertriebs GmbH, 61184 Karben (DE)
(72) Erfinder: SADIKU, Sadik, 63543 Neuberg (DE); WITWER, Keith, Fort Wayne, Indiana 46804 (US)
(74) Vertreter: Patentanwälte Olbricht Buchhold Keulertz
(86) Internationale Anmeldenummer: PCT/EP2016/078666
(87) Internationale Veröffentlichungsnummer: WO 2017/089455

(56) Entgegenhaltungen:
- WO-A1-2005/074105
- WO-A1-2010/085986
- WO-A2-2015/158996
- DE-A1-102004 035 084
- DE-A1-102014 003 602

## Beschreibung

Die Erfindung befasst sich mit einem Verfahren zur Herstellung einer Spulenwicklung zum Einlegen in radial offene Nuten von Statoren oder Rotoren elektrischer Maschinen, wobei die Spulenwicklung aus einer Anzahl miteinander verflochtener Drähte besteht, die mehrfach gegenläufig umgebogen werden, so dass parallel zueinander liegende Schenkel der Drähte, die zum Ausfüllen der Nuten bestimmt sind, durch dachartige Wickelköpfe verbunden sind, die stirnseitig über die Rotoren oder Statoren überstehen, wobei eine flache und drehbare Wickelschablone sowie eine Drahthandhabungsvorrichtung zum Einsatz kommen.

Das Verfahren eignet sich insbesondere auch für das Verwenden von im Querschnitt im Wesentlichen rechteckförmigen Drähten, die im Hinblick auf einen optimalen Füllgrad in den Nuten des Stators bevorzugt werden. Herkömmliche Wickelverfahren für Runddraht sind für derartige Drahtquerschnitte nicht einsetzbar.

Das vorliegende Verfahren dient vor allem dazu, eine sogenannte verteilte Wellenwicklung herzustellen, die dann in die Nuten eines Stators (oder Rotors) eingelegt werden kann. Eine verteilte Wellenwicklung weist eine Vielzahl paralleler Drähte auf, die gerade Abschnitte besitzen, die in den Nuten eines Stators angeordnet werden. Diese geraden Abschnitte alternieren zwischen einer inneren und einer benachbarten äußeren Radiallage in dem Stator, wenn sich das Drahtmuster radial um den Stator bewegt. Dieses verteilte Wellenmuster enthält eine Anzahl X an Phasen oder gruppierter Nuten in dem Stator. Im Allgemeinen ist X ein Vielfaches von 3, es sind aber auch Konstruktionen möglich, bei welchen X eine beliebige andere ganze Zahl ist. Die Anzahl paralleler Drähte in dem Wicklungsmuster der verteilten Welle beträgt 2X. In dem Wellenmuster werden die geraden Abschnitte des Drahtes aus einem Schlitz mit den geraden Abschnitten des Drahtes in der Nut verbunden, die X Nuten entfernt in der Gegenuhrzeigerrichtung und der Uhrzeigerrichtung liegen, wobei sie durch gabelförmige Verbindungsdrähte oder Endbiegeabschnitte verbunden. Die Welle wird dadurch erzeugt, dass einer der beiden verbindenden Endabschnitte mit der Nut X Nuten entfernt in der Gegenuhrzeigerrichtung verbunden wird, während auf der gegenüberliegenden Seite des Stators der zugehörige Endbiegeabschnitt mit der Nut X Nuten entfernt in der Uhrzeigerrichtung verbunden wird. Diese Endverbindungen alternieren, da sich das Drahtmuster radial um den Stator bewegt. Diese gabelförmigen Verbindungen sorgen auch für den Lagewechsel zwischen den alternierenden inneren und äußeren bzw. äußeren und inneren radial benachbarten Lagen der geraden Drahtabschnitte über die Statornuten bei jedem der einzelnen Drähte, die das Wicklungsmuster bilden. Das endgültig vorgefertigte Drahtmuster besitzt 2 X parallele Drähte, die in einem kontinuierlichen, verteilten und miteinander verwobenen Wellenmuster gewickelt sind, das flach ausgelegt ist. Dieses Muster hat 2 X Anfangsdrähte in einer oberen Lage und 2 X Enddrähte in einer unteren Lage. Diese sind einfache gerade Drahtabschnitte. Alle anderen geraden Drahtabschnitte zwischen diesen Anfangs- und Enddrähten sind paarweise mit einem Draht in der unteren und einem Draht in der oberen Lage ausgebildet. Die Gesamtzahl dieser geraden Drahtabschnitte bestimmt sich durch die Anzahl von Leitern, die in jede Nut der Stator-Konstruktion mit diesem Muster ausgefüllt werden. Die Anzahl an Leitern in einer Statornut muss ein Vielfaches von zwei sein, wobei die Gesamtzahl an Drähten in einer zu füllenden Statornut bei diesem Muster zwei A beträgt, wobei A die Anzahl an Umdrehungen darstellt, um die sich das Wicklungsmuster um den Stator-Umfang windet.

Das genaue Aussehen der zu erzeugenden Wicklung wird im Rahmen des Ausführungsbeispiels noch näher erörtert.

Aus der EP 1 469 579 B1 ist ein Verfahren zur Herstellung einer solchen Wicklung bekannt, das auf einer sechseckigen Schablone basiert. In der Praxis konnte sich dieses Verfahren allerdings nicht durchsetzen, da die technische Umsetzung schwierig ist.

Aus der DE 10 2014 003 602 A1 ist ein Verfahren bekannt, das ebenso auf eine relativ komplexe Wickelschablone angewiesen wird, die in 120°-Schritten gedreht wird. Auch für dieses Verfahren ist eine komplexe Wickelvorrichtung erforderlich, deren technische Umsetzung schwierig ist.

Ein weiteres Verfahren ist aus der DE 10 2008 019 479 A1 bekannt. Dort müssen, wie bereits angesprochen, zunächst zwei Wicklungshälften mittels einer flachen, leistenförmigen Schablone gewickelt, wobei dann anschließend die beiden Hälften miteinander zu der dann in den Stator einzulegenden Gesamtwicklung verflochten werden. Ein sehr ähnliches Verfahren ist aus der DE 10 2004 035 084 A1 bekannt. Dieses sieht ein praktisch identisches Herstellen der beiden Teilwicklungen vor, unterscheidet sich aber in der Art des Zusammenführens der Wicklungshälften. Ein unmittelbares Wickeln aller Drähte mit der Anzahl 2 X ist jedenfalls bei beiden Verfahren nicht möglich, da nach dem Verschieben, das dem ersten Umbiegen zur Herstellung der gebogenen Wickelköpfe um den X-fachen Abstand der Drähte entsprechend die Hälfte der Drähte noch mit den Drähten im Bereich der Drahtzufuhr kollidieren würde. Das Zusammensetzen der beiden Hälften der verteilten Wellenwicklung ist zwar nicht sonderlich problematisch, stellt aber einen zusätzlichen Verfahrensschritt dar und erfordert ein exaktes Ausrichten der beiden Hälften zueinander, bevor sie in ein Magazin eingelegt werden, von welchem aus sie dann in die Nuten des Stators eingelegt werden. Die beiden letzten Schritte des Einlegens in das Magazin und des Übertragens in die Nuten des Stators sind als solches bekannt und werden auch in Ergänzung zu dem hier vorgestellten Verfahren eingesetzt, um mit den hergestellten Wicklungen dann schließlich den gewünschten Stator oder Rotor herzustellen. Auch ein nachträgliches Hinzuführen der zusätzlichen Drähte in das laufende Verfahren ist bei dieser Verfahrensausgestaltung nicht möglich, da auch später hinzugeführte Drähte mit dem hier zunächst vorgesehenen Wickelschritt in Kollision mit bereits verarbeiteten Drähten geraten würden.

Die Aufgabe der vorliegenden Erfindung besteht darin, ein Verfahren der eingangs genannten Art zu schaffen, das unter Verwendung einer einfachen Wickelschablone die Herstellung der gesamten Spulenwicklung in einem Verfahrensablauf ohne das nachträgliche Zusammenführen zweier Teilwicklungen ermöglicht.

Erfindungsgemäß wird die Aufgabe durch ein Verfahren der eingangs genannten Art gelöst, das die folgenden Schritte aufweist:
A) Paralleles Zuführen von allen für die Spulenwicklung zum Einsatz kommender Drähte in einer Richtung senkrecht zur Drehachse der Wickelschablone;
B) Halten der Drähte an einer Fixierstelle in einem ersten Haltebereich der auszubildenden Schenkel auf der Wickelschablone;
C) Halten der Drähte an einer Fixierstelle in einem zweiten Haltebereich in einem Abstand vor der Wickelschablone bezogen auf die Zufuhrrichtung;
D) Vor dem ersten Drehen der Wickelschablone erfolgt ein relatives Verschieben des ersten Haltebereiches der Wickelschablone relativ zum zweiten Haltebereich parallel zur Drehachse der Wickelschablone um ein Wegstück, dessen Länge ungefähr gleich oder gleich der Hälfte des Abstands der äußersten Drähte ist, wodurch ein bezüglich der Schenkel geneigter Drahtabschnitt zwischen dem ersten und dem zweiten Haltebereich geformt wird;
E) Nach einem vorangehenden Verschieben gemäß D erfolgt ein Drehen der Wickelschablone um 180°, wobei die Haltestelle aus dem ersten Haltebereich in einen dritten Haltebereich auf der dem ersten Haltebereich gegenüberliegenden Seite der Wickelschablone und die Haltestelle aus dem zweiten Haltebereich in den ersten Haltebereich verlagert wird;
F) Fixieren der nachgeführten Drähte an der Fixierstelle im zweiten Haltebereich und an der Fixierstelle im ersten Haltebereich;
G) vor oder nach Schritt F erfolgt ein Lösen der Haltewirkung im dritten Haltebereich;
H) Verschieben des ersten Haltebereiches relativ zum zweiten Haltebereich parallel zur Drehachse der Wickelschablone um ein Wegstück, dessen Länge ungefähr gleich oder gleich der Hälfte des Abstandes der äußersten Drähte ist, wodurch ein bezüglich der Schenkel geneigter Drahtabschnitt geformt wird;
I) Drehen der Wickelschablone um 180°, wobei wiederum die Fixierstelle im ersten Haltebereich in den dritten Haltebereich auf der dem ersten Haltebereich gegenüberliegenden Seite der Wickelschablone und die Haltestelle im zweiten Haltebereich in den ersten Haltebereich verlagert wird;
J) Wiederholung der Schritte F bis I, bis die Spulenwicklung vollständig ist;
K) Letztes relatives Verschieben des ersten Haltebereiches zum zweiten Haltebereich parallel zur Drehachse der Wickelschablone um ein Wegstück, dessen Länge ungefähr gleich oder gleich der Hälfte des Abstandes der äußersten Drähte ist, wodurch ein bezüglich der Schenkel geneigter Drahtabschnitt zwischen dem ersten und dem zweiten Haltebereich geformt wird;
L) Durchtrennen der Drähte am zweiten Haltebereich;
M) vollständiges oder teilweises Abstreifen der Spulenwicklung von der Wickelschablone.

Das neue Verfahren bietet den Vorteil, dass sämtliche Drähte mit der Anzahl 2 mal X (im Vergleich zu bisher zwei nachträglich zu verdrillenden Windungshälften mit jeweils einer Anzahl X an Drähten) in einem kontinuierlichen Verfahren verarbeitet werden können. Ein wesentlicher Aspekt des neu angegebenen Verfahrens ist, dass bereits vor dem Aufwickeln der zugeführten Drahtabschnitte auf die Wickelschablone jeweils ein geneigter Drahtabschnitt erzeugt wird, der dann beim Aufwickeln, d.h. beim Drehen der Wickelschablone in den Schritten E oder I mittig umgebogen wird und dadurch dachförmige Wickelköpfe ausbildet. Durch diese Änderung der Verfahrensreihenfolge kann das bisher bei allen mit flacher Wickelschablone und 180°-Drehschritten arbeitenden Wickelverfahren erforderliche Zusammenführen von zwei zunächst unabhängig voneinander erzeugten Teilwicklungen entfallen, was eine erhebliche Vereinfachung bei der Herstellung solcher Wicklungen darstellt und das Einbinden des Wickelverfahrens in weitergehend automatisierte, kontinuierlich ablaufende Herstellungsprozesse oft erst möglich macht.

Es hat sich auch gezeigt, dass sich durch den geänderten Verfahrensablauf kürzere Wickelköpfe ausbilden lassen. Neben der Materialersparnis wird durch diesen Effekt auch die gesamte axiale Baulänge des Rotors oder Stators reduziert, was sich positiv auf die Einsatzmöglichkeiten einer mit einem solchen Stator oder Rotor ausgebildeten Elektromaschine auswirkt, weil entweder auf gleichem Bauraum eine Maschine mit höherer Leistung zum Einsatz kommen kann oder Bauraum eingespart werden kann.

Es ist weiterhin anzumerken, dass in den Haltebereichen ein absolut positionsgenaues Fixieren der Drähte nicht notwendig, unter Umständen noch nicht einmal erwünscht ist. Wesentlich ist, dass der Draht derart gehalten ist, dass die gewünschten Formvorgänge flüssig durchgeführt werden können, wobei insbesondere im Rahmen des Verschiebens zum Ausbilden der geneigten Abschnitte ohnehin ein gewisses Nachführen der Drähte oder der sie haltenden Einrichtungen zweckmäßig ist, um für einen Ausgleich zu sorgen.

Bevorzugte Weiterbildungen des Verfahrens sind in den Ansprüchen 2 bis 17 angegeben.

Zunächst ermöglicht es die grundsätzliche Auslegung des Verfahrens, alle Drähte gemeinsam in einem kontinuierlichen Verfahren zu einer Wicklung zu formen, wobei dies entweder so ablaufen kann, dass von Beginn an alle Drähte auf einmal zugeführt werden oder sukzessive die Drähte in das laufende Verfahren eingeführt werden. Auch hierbei werden neu hinzugefügte Drähte sukzessive zunächst zugeführt, dann parallel unter Ausbildung eines geneigten Dachabschnittes verschoben und schließlich in die synchronen Dreh-/Verschiebefolge einbezogen. In letzterem Fall läuft dann das Verfahren am Ende entsprechend der verzögerten von einigen Drähte am Ende um die entsprechende Anzahl von Schritten länger, ohne dass dadurch der Verfahrensfluss unterbrochen werden müsste.

Eine Ausführungsform des Verfahrens sieht vor, dass im Schritt A das Zuführen der Drähte unter Verwendung einer Drahtzugvorrichtung erfolgt, wobei die Drähte aus einem Drahtvorrat abgezogen werden.

Das Ziehen der Drähte ist auf Grund deren schwach ausgeprägter Eigensteifigkeit bevorzugt und ermöglicht den Einsatz eines Drahtvorrates z.B. in Form einer Spule, auf der die Drahtrohlinge ggf. in einem bereits vorkonfigurierten Zustand und Abstand bevorratet sind.

Die Drahtzugvorrichtung wird vorzugsweise auch dazu eingesetzt, die noch mit ihr verklemmten freien Drahtenden nach Durchführung des Schrittes B oder C oder auch, bei später eingeführten Drähten, im weiteren Verfahren, in Bezug auf den ersten Haltebereich der Drähte zur Formung der Wicklungsanschlüsse in Richtung der Drehachse der Wickelschablone abzuwinkeln, wodurch ein flüssiger Verfahrensablauf ohne zusätzliche mechanische Vorrichtungen erreicht wird.

Das Fixieren der Drähte an den Haltestellen erfolgt vorzugsweise unter Verwendung von Haltevorrichtungen als Teile der Drahthandhabungsvorrichtung. Die Drähte können starr verklemmt werden, was aber aufgrund deren Selbsthemmung oft gar nicht erforderliche ist, so dass gar keine Haltevorrichtungen mit aktiv betätigbaren Klemmelementen zum Einsatz kommen müssen. Es kann genügen, Haltevorrichtungen mit einer geeigneten Geometrie beispielsweise von Führungskanälen auf die Drähte aufzusetzen, die dann einen hinreichenden Halt gegen ein Durchrutschen beim seitlichen Verschieben bieten. Im zweiten Haltebereich ist eine Klemmvorrichtung bevorzugt, die beispielsweise durch die Drahtzufuhr bereitgehalten werden kann.

Vorteilhafterweise werden wenigstens zwei Haltevorrichtungen verwendet, wobei eine erste Haltevorrichtung im Schritt B im ersten Haltebereich und die zweite Haltevorrichtung im zweiten Haltebereich im Schritt C zum Einsatz kommt. Die Haltevorrichtungen sind aber nicht an den jeweiligen Haltebereich gebunden sondern können zwischen den drei Haltebereichen bewegt werden, so dass sie die Haltewirkung nicht nur während ihres Verschiebens sondern auch während des Drehens der Wickelschablone aufrechterhalten können.

Kommen nur zwei Haltevorrichtungen für die drei Haltebereiche zum Einsatz, bewegt sich die jeweilige Haltevorrichtung nach dem Aufheben der Haltewirkung im dritten Haltebereich unmittelbar in den zweiten Haltebereich um dort die nachgeführten Drähte zu verklemmen oder anderweitig zu fixieren. Für diese Vorgehensweise ist eine aufwändigere Mechanik und Steuerung erforderlich, unter Umständen verlängern sich auch die Taktzeiten.

Vorzugsweise kommt daher eine dritte Haltevorrichtung zum Einsatz, die erstmals in Schritt F in den Verfahrensablauf eingreift und die nachgeführten Drähte im zweiten Haltebereich verklemmt. Auf dieser Weise kann dann in zeitlicher Nähe zum Schritt F das Lösen der Haltewirkung im dritten Haltebereich erfolgen und die Verlagerung der ersten Haltevorrichtung aus dem dritten in den zweiten Haltebereich kann im Rahmen des nächsten Drehvorganges der Wickelschablone ausgeführt werden. Die Haltevorrichtungen bewegen sich mit bei Drehvorgängen der Wickelschablone aus dem ersten in den dritten Haltebereich, dann beim nächsten Drehvorgang vom dritten in den zweiten Haltebereich und schließlich wieder vom zweiten in den ersten Haltebereich, von wo aus sich die Bewegungsfolge dann bei einem Weiterdrehen der Wickelschablone wiederholt.

Selbstverständlich ermöglicht die Führung der Haltevorrichtung vorzugsweise auch deren individuelle Verlagerung parallel zur Drehachse der Wickelschablone, um in Haltestellung die Durchführung der Schritte D, H und K zu ermöglichen.

Alternativ sind zwei hinsichtlich der Drehbewegung mit der Wickelschablone gekoppelte Haltevorrichtungen (erste und dritte Haltevorrichtung) möglich, die wechselweise je nach Drehzustand die Drähte im ersten oder dritten Haltebereich fixieren. Die zweite Haltevorrichtung ist dann vorzugsweise von der Drehbewegung der Wickelschablone entkoppelt und wird zwischen dem ersten und zweiten Haltebereich bewegt, wobei sie eine Kurvenbahn beschreiben kann, um immer in der Nähe der flachen Wickelschablone angeordnet zu sein, wenn diese ihre Drehbewegung ausführt.

Die erste und dritte Haltevorrichtung werden vorzugsweise radial und axial bezüglich der Drehachse der Wickelschablone zwischen jeweils zwei Endstellungen bewegt, wobei in einer radial äußere Stellung die Drähte frei und in einer radial inneren Stellung die Drähte fixiert sind. In axialer Richtung werden die Haltevorrichtungen bis in eine maximal ausgefahrene Endstellung bewegt, wenn der Verschiebeschritt D, H oder K durchgeführt wird. In der entgegengesetzt liegenden axialen Endstellung kann die zurückgezogenen Haltevorrichtung an den Drähten vorbei bewegt werden, wenn sie mit der Wickelschablone vom dritten in den ersten Haltebereich bewegt wird.

In einer bevorzugten Weiterbildung des Verfahrens ist vorgesehen, dass die Wickelköpfe im Bereich des durch das Drehen der Wickelschablone zuvor im Schritt E oder I aus dem geneigten Drahtbereich ausgebildeten Biegebereiches endgültig geformt werden. Dieser Formvorgang kann eventuelle Unregelmäßigkeiten in der Formgebung der Wickelköpfe ausgleichen und dient insbesondere auch dazu, den bereits diskutierten Überstand der Wickelköpfe über den Stator oder Rotor im Sinne des ohnehin gegebenen erfindungsgemäßen diesbezüglichen Vorteils weiter zu verkleinern. Zum Einsatz kann hier beispielsweise ein Formwerkzeug kommen, das gegen die Wickelköpfe gepresst wird.

Nach dem Ausbilden der vollständigen Spulenwicklung erfolgt das Durchtrennen der Drähte im Schritt L in einer vorzugsweise in einer Drehstellung der Wickelschablone, in welcher die anfänglich zugeführten Drahtenden auf der Seite der Wickelschablone liegen, auf der die Drahtzufuhr erfolgt. Auf diese Weise wird erreicht, dass die Anschlüsse an beiden Enden der Spulenwicklung nach dem Einlegen der Wicklung in den Stator oder Rotor auf der gleichen Seite liegen, was ihre Kontaktierung vereinfacht.

Nachfolgend wird anhand der beigefügten Zeichnungen näher auf Ausführungsbeispiele der Erfindung eingegangen. Es zeigen:
Fig. 1 bis 13 eine Abfolge eines Verfahrens zur Herstellung einer flachen Spulenwicklung, wobei im oberen Abschnitt a jeweils eine schematische stirnseitige Ansicht einer Wickelvorrichtung mit drei umlaufenden Haltevorrichtungen zur Durchführung des Verfahrens, im mittleren Abschnitt b jeweils eine Draufsicht auf die Wickelvorrichtung und im unteren Abschnitt c jeweils nur die mit diesem Schritt bereits erzeugten Spulenwindungen in Draufsicht gezeigt sind;
Fig. 14 eine Draufsicht auf eine flache Wicklung mit einer halben Anzahl von Drähten im Vergleich zu den zuvor gezeigten Beispielen;
Fig. 15 eine Ansicht eines Stators, in dessen Nuten die Wicklung aus Fig. 17 aufgenommen ist;
Fig. 16 bis 29 eine Abfolge einer Ausführungsform des Verfahren mit einer geänderten Kinematik der Haltevorrichtungen in einer Darstellungsweise ähnlich Fig. 1 bis 13;

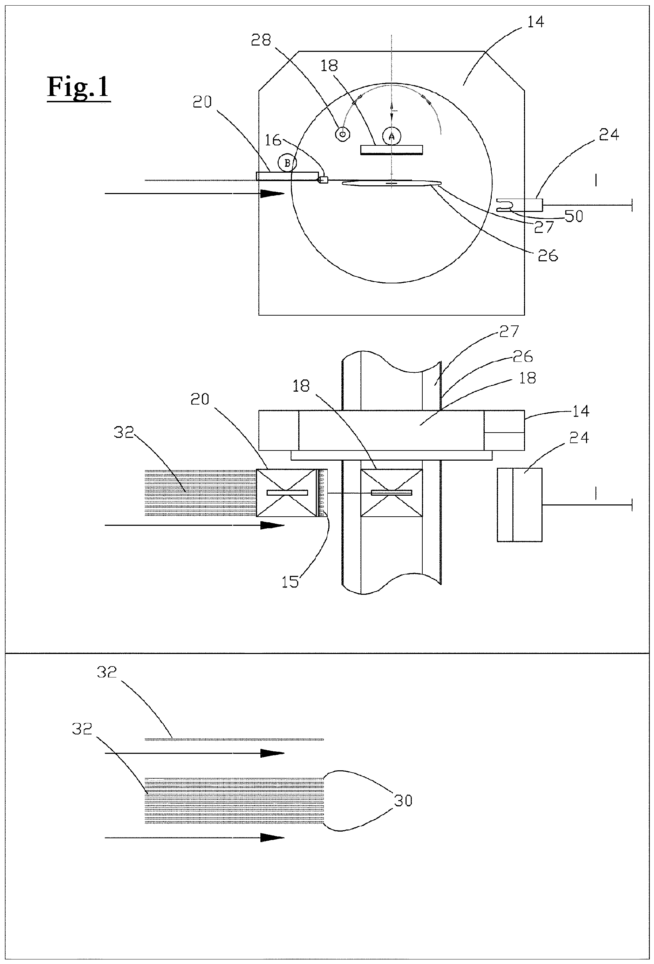

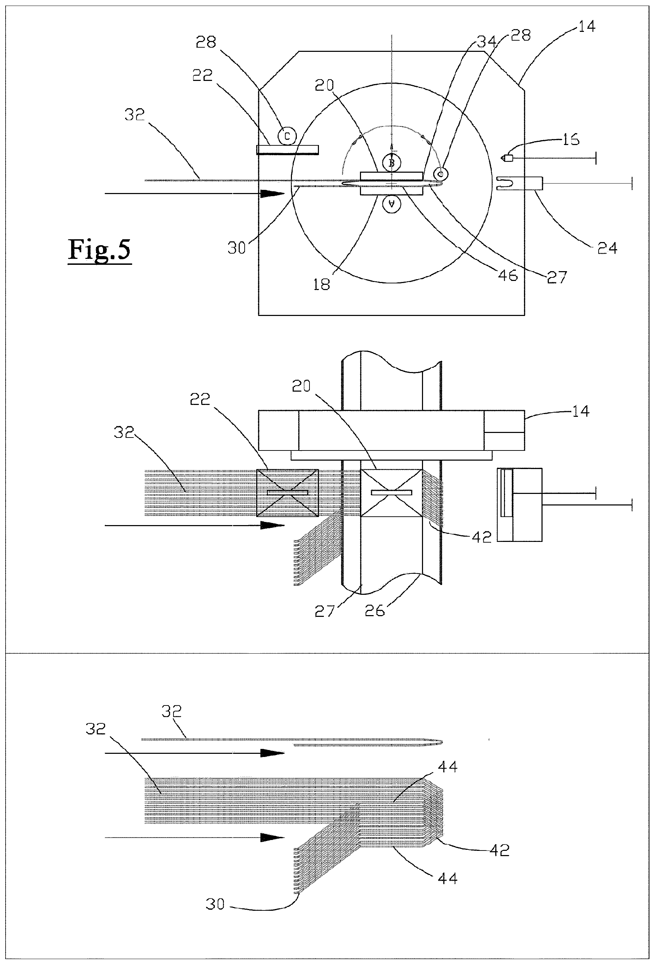

Fig. 1 zeigt die Ausgangsposition zu Beginn eines Verfahrens zur Herstellung einer Spulenwicklung 70 für einen Stator eines Elektromotors (nicht gezeigt). Hierzu steht im gezeigten Ausführungsbeispiel eine Wickelvorrichtung 10 bereit, die einen Wickelkopf 12 mit einer Drahthandhabungsvorrichtung 14 besitzt, die eine Drahtzugvorrichtung 16, drei Drahthaltevorrichtungen 18, 20, 22 (siehe auch Fig.5) und eine Wickelkopfformvorrichtung 24 aufweist. Die Wickelvorrichtung 10 arbeitet mit einer Wickelschablone 26 zusammen, die als Flachschablone ausgebildet ist, d.h. eine leistenartige Formgebung besitzt. Der Querschnitt der Wickelschablone 26 wird im oberen Teil a der Darstellung von Fig.1 deutlich, aus welcher die sich zu den Flanken hin verjüngenden Randbereiche 27 der Wickelschablone 26 und ein Radius der Flanken selbst deutlich werden. Die Länge der Wickelschablone 26, die nicht in voller Länge gezeigt ist, bestimmt sich nach der Länge der zu herzustellenden Spulenwicklung 70 und der genauen Ausgestaltung des Verfahrens, wobei die Länge der Wickelschablone 26 nicht der Länge der Spulenwicklung 70 entsprechen muss und sie beispielsweise dann erheblich kürzer als die Spulenwicklung 70 sein kann, wenn diese im Laufe des Verfahrens bereits sukzessive von der Schablone an eine Übertragungsvorrichtung (nicht gezeigt) weitergegeben wird. Der Wickelvorrichtung ist außerdem eine Drahtrollvorrichtung 28 zugeordnet, die während der Rotationsvorgänge ein Rollformen zu verarbeitender Drähte zur besseren Anlage an der Wickelschablone 26 durchführt.

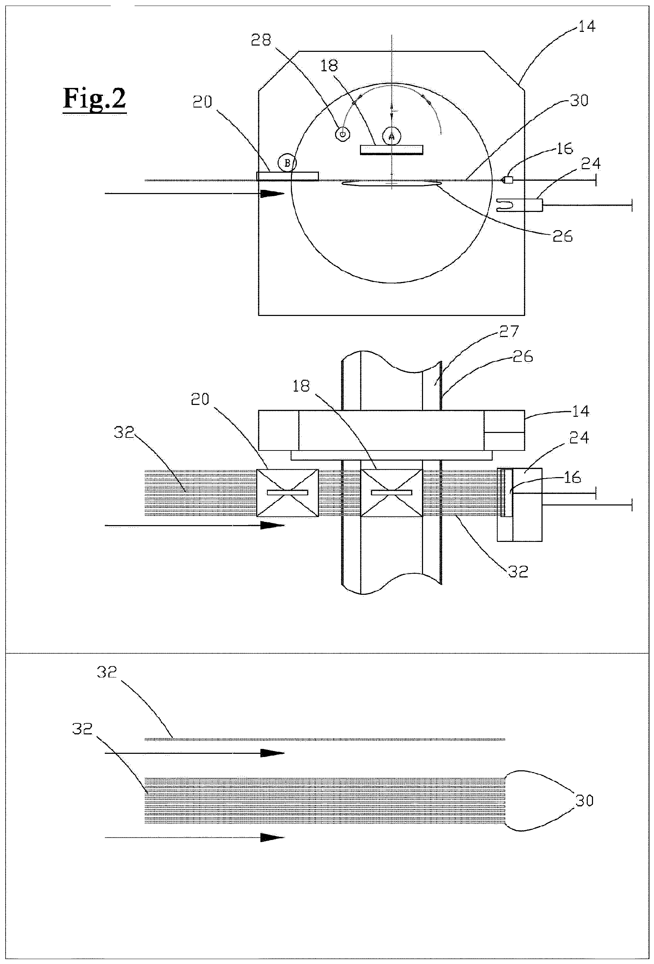

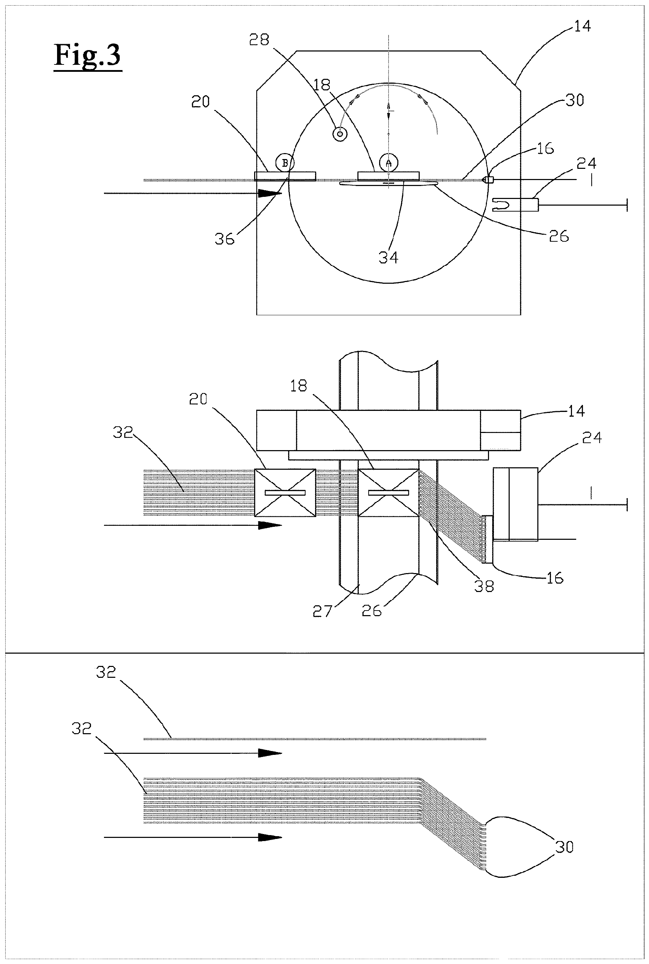

Der Ablauf des Verfahrens gestaltet sich wie folgt. Gemäß Fig.1 befindet sich eine erste Haltevorrichtung (A) 18 in einer von der Wickelschablone 26 beabstandeten Wartestellung. Eine zweite Haltevorrichtung (B) 20 befindet sich in einer gelösten Ruhestellung, so dass die sie durchlaufenden Drahtanfänge nicht verklemmt sind. Die Drahtzugvorrichtung 16 ist mit den Drahtanfängen 30 verklemmt. Im gezeigten Ausführungsbeispiel werden 12 Drähte 32 gleichzeitig verarbeitet, die parallel zueinander geführt von einem nicht gezeigten Drahtvorrat abgezogen werden. Es ist aber auch möglich, zunächst nur einen Teil der Drähte in das Verfahren einzuführen und die verbleibenden Drähte erst später in den Verfahrensablauf einzubringen. Ausgehend von Fig.1 zieht die Drahtzugvorrichtung 16 das parallele Bündel aus Drähten 32 in eine in Fig.2 gezeigte definierte Lage, so dass die Drahtanfänge 30 um ein bestimmtes Maß über die Wickelschablone 26 überstehen. Die Drähte 32 können dabei die noch nicht verklemmte zweite Haltevorrichtung (B) ungehindert passieren. Nachfolgend wird die erste Haltevorrichtung (A) 18 aus ihrer Ruhelage in eine an die Wickelschablone 26 angenäherte oder anliegende Haltestellung bewegt (siehe Fig.3). Mit dem Auslösen wird eine erste Haltestelle in einem ersten Haltebereich 34 an der Oberseite der flachen Wickelschablone 26 definiert. In zeitlicher Nähe zum Verklemmen der Drähte 32 im ersten Haltebereich 34 erfolgt ein Auslösen der zweiten Haltevorrichtung (B) 20, so dass ein zweiter, in einem bestimmten Abstand zum ersten Haltebereich 34 liegender zweiter Haltebereich 36 der Drähte definiert wird. Der zweite Haltebereich 36 liegt zwischen dem Drahtvorrat und dem ersten Haltebereich 34.

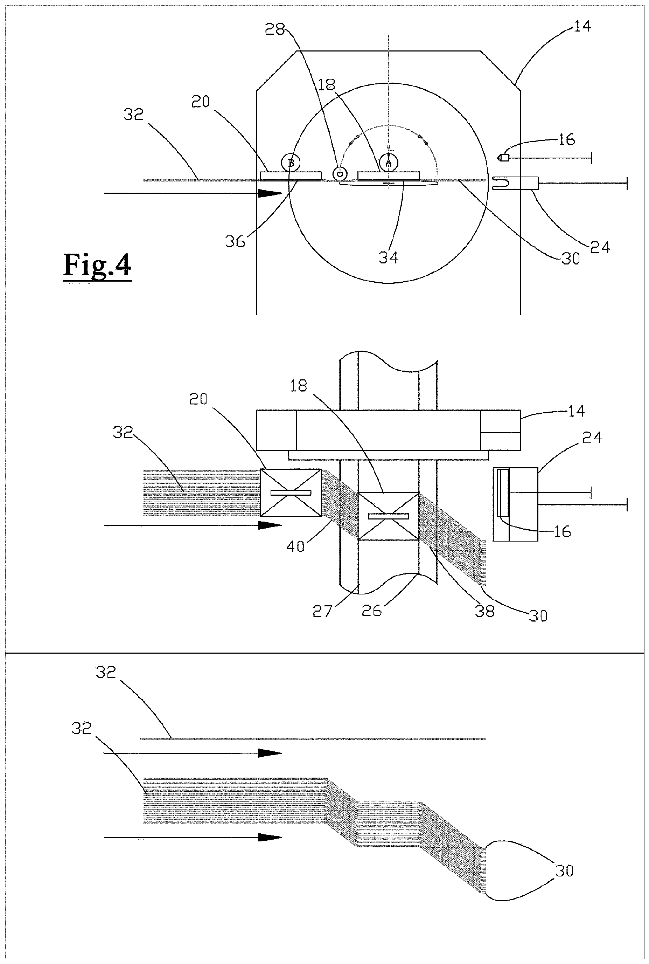

In Fig. 3 ist ferner veranschaulicht, wie die Drahtanfänge 30 mittels der Drahtzugvorrichtung 16 durch eine Seitwärtsbewegung von letzterer in einen gebogenen Drahtabschnitt überführt werden, der die Anschlussstelle der fertigen Spulenwicklung 70 darstellt. Durch die erste Haltevorrichtung 18 im ersten Haltebereich 34 wird eine Knickstelle 38 definiert. Die Drahtzugvorrichtung wird anschließend von den Drahtanfängen 30 gelöst und wird für die restliche Durchführung des Verfahrens in der hier als Ausführungsbeispiel beschriebenen Variante nicht mehr benötigt. Entsprechend wird die Drahtzugvorrichtung in eine Ruhestellung bewegt, die in Fig.4 gezeigt ist.

Weiterhin ist in Fig. 4 ein Verfahrensschritt veranschaulicht, bei welchem ein geneigter Drahtabschnitt 40 erzeugt wird. Diese Drahtabschnitte 40 bilden später Wickelköpfe 42 zwischen geraden Schenkeln 44, die in Nuten eines Stators oder Rotors liegen. Auf die Wickelköpfe 42 wird im nachfolgenden Verfahrensschritt und auch später noch näher eingegangen. Gut erkennbar ist in Fig.4 gegenüber Fig.3 auch dass sich die zweite Haltevorrichtung 20 durch den Verschiebschritt an die Wickelschablone 36 angenähert wird, weil die Länge des geneigten Abschnittes dem Abstand zwischen der ersten Haltevorrichtung 34 und der zweiten Haltevorrichtung 36 in Fig. 3 entsprechen muss. Diese Nachstellbewegung ist geführt und kann durch eine aktive Nachführung oder durch eine passive Ausgleichsbewegung erfolgen.

Nach dem in Fig. 4 gezeigten Schritt des Verschiebens des im ersten Haltebereich 34 fixierten Drahtabschnittes relativ zu dem im zweiten Haltebereich 36 fixierten Drahtabschnitt unter Ausbildung des geneigten Drahtabschnittes 40 wird die Drehvorrichtung 28 aktiviert und dreht die Wickelschablone 26 sowie die ebenfalls mit ihr in Drehrichtung gekoppelte erste Haltevorrichtung (A) 18 aus dem ersten Haltebereich 34 in einen in Fig.5 gezeigten dritten Haltebereich 46, wobei die zweite Haltevorrichtung (B) 20, die unverändert mit den Drähten 32 verklemmt ist, aus dem zweiten Haltebereich 36 in den ersten Haltebereich 34 mitgenommen wird und dabei auch weiterer Draht der Drähte 32 vom Drahtvorrat abgezogen wird.
Der geneigte Drahtabschnitt 40 wird durch die Rotation der Wickelschablone in die bereits angesprochenen dachförmigen Wickelköpfe 42 überführt, weil sich die Drähte an die Flanken der Wickelschablone 26 anschmiegen, wobei die Wickelköpfe 42 sich zu Wendestellen 48 hin entsprechend der Form der Randbereiche 27 verjüngen und an den Wendestellen 48 selbst Biegeradien ausgebildet werden.

In Fig. 5 ist auch erstmals die dritte Haltevorrichtung (C) 22 gezeigt, die sich hier aber noch in einer Ruhestellung befindet, weil sie erst später in den Verfahrensablauf eingreift.

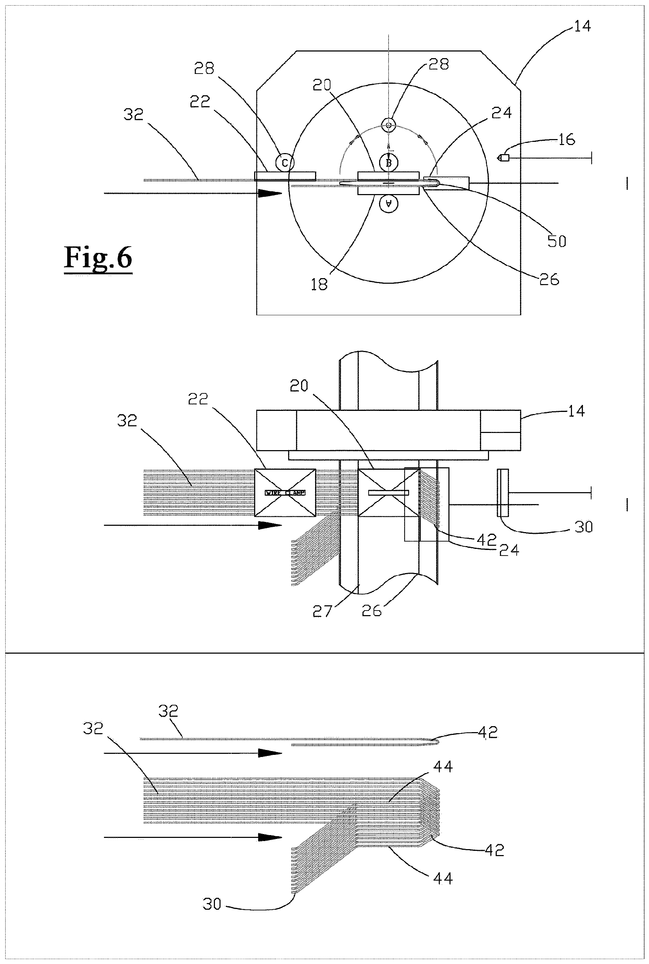

In Fig. 6 ist ein optionaler Schritt veranschaulicht, in welchem mittels der Drahtformvorrichtung 24 die zuvor erzeugten Wickelköpfe 42 eine endgültige Form erhalten. Die Drahtformvorrichtung 24 besitzt ein Formelement 50, das als Negativform der Wickelköpfe 42 in ihrer angestrebten Endform ausgebildet ist und unter Druck gegen die Wickelköpfe 42 angedrückt wird.

Zur Vorbereitung der nächsten Verfahrensschritte wird die dritte Haltevorrichtung (C) 22 in den zweiten Haltebereich 36 bewegt. Die erste Haltevorrichtung (A) 18 kann auch bereits gelöst werden, kann aber auch noch über den nächsten Verfahrensschritt mit den Drähten 32 im dritten Haltebereich 46 verklemmt bleiben.

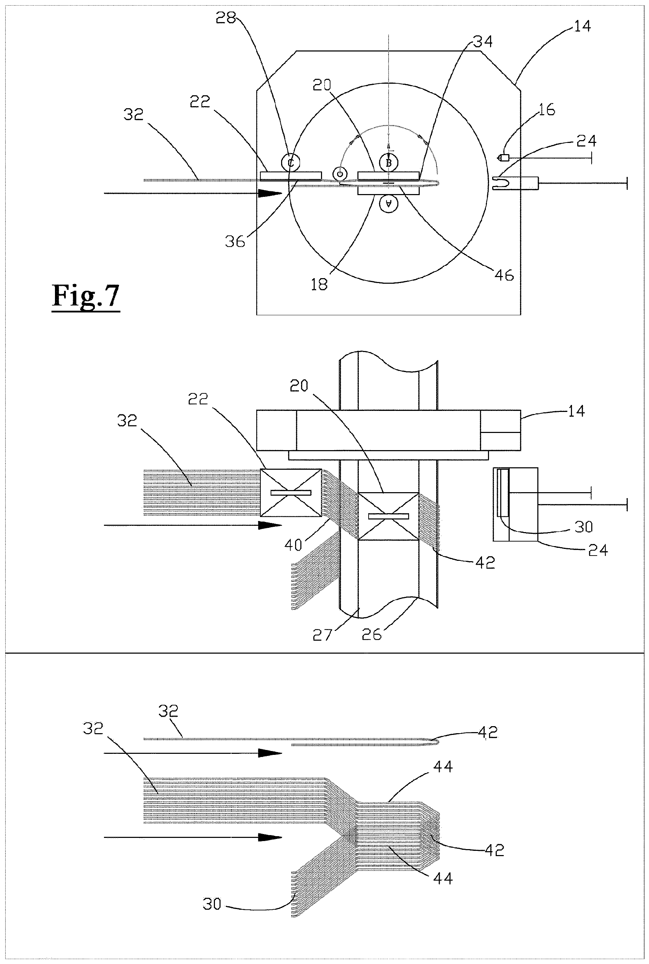

Der nächste Verfahrensschritt, der in Fig. 7 gezeigt ist, sieht wiederum das Ausbilden eines geneigten Übergangsbereiches 40 zwischen der zuvor durch Auslösen der dritten Haltevorrichtung (C) 22 erzeugten Haltestelle im zweiten Haltebereich 36 und dem durch die nach wie vor verklemmte zweite Haltevorrichtung (B) 20 vor, die sich noch im ersten Haltebereich 34 befindet. Dies geschieht wiederum durch relatives axiales Verschieben der verklemmten Haltevorrichtungen (hier B und C) im ersten und zweiten Haltebereich 34, 36 parallel zur Drehachse der Wickelschablone 26. Sofern die dritte Haltevorrichtung (C) 22 noch verklemmt ist, was aus Gründen der Stabilisierung des bereits erzeugten Teils der Spulenwicklung 70 vorteilhaft sein kann, bewegt sich die Haltevorrichtung (hier A) im dritten Haltebereich 46 mit der Haltevorrichtung (hier B) im ersten Haltebereich gemeinsam axial relativ zur Haltevorrichtung (hier C) im zweiten Haltebereich 36.

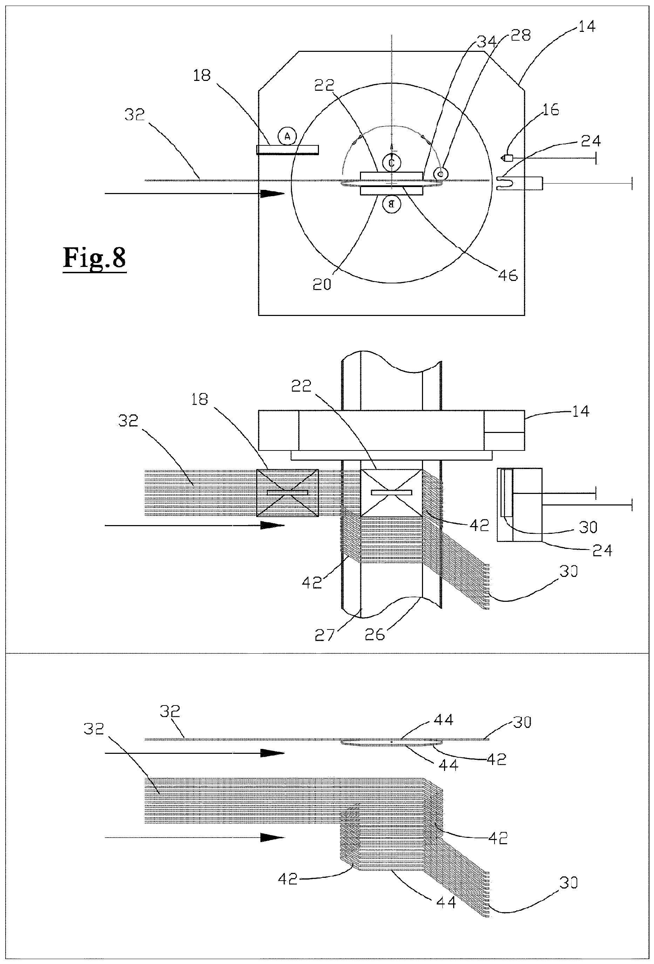

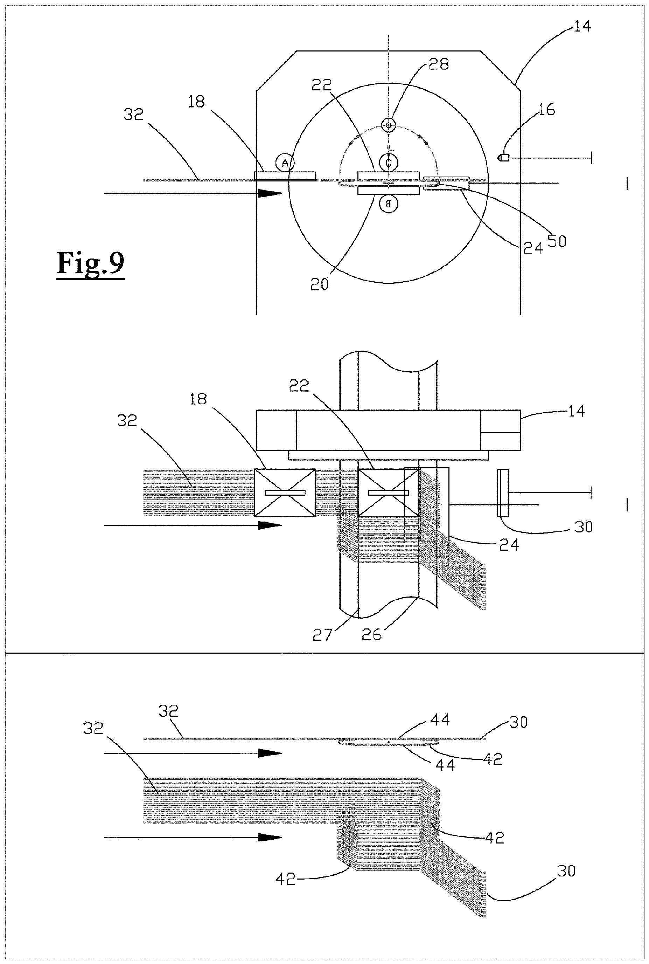

Im Teil c von Fig. 7 ist zu erkennen, dass nach diesem Schritt ein im Schritt gemäß Fig.4 erzeugter erster Abschnitt 52 paralleler Schenkel 44 in seitlichem Versatz zu den parallel von der Drahtzufuhr abgezogenen Drähten 32 an der Unterseite der Wickelschablone 26 befindet. Dies bedeutet, dass bei dem nachfolgenden erneuten Durchführen eines Wickelvorganges um 180° durch entsprechendes Drehen der Wickelschablone 26 der erzeugte erste Drahtabschnitt nicht mit nachfolgenden Drähten ins Gehege kommt. Sinngemäß gelten im Übrigen die Ausführungen zu Fig. 5 auch für den Wickelvorgang gemäß Fig. 8, wobei sich die Haltevorrichtung 18, 20, 22 aber in jeweils anderen Haltebereichen befinden. Fig. 8c zeigt eine vollständige erste Windung der späteren Spulenwicklung auf der Wickelschablone 26 mit Wickelköpfen 42 auf beiden Seiten der geraden Schenkel 52, die später in den Nuten des Stators oder Rotors liegen. Es schließt sich wiederum, wie in Fig.9 veranschaulicht ist, ein optionaler Schritt der Formung der Wickelköpfe 42 mittels des Formelements 50 der Drahtformvorrichtung 24 an, der bereits im Zusammenhang mit Fig. 6 erläutert worden ist, um die Formgebung der Wickelköpfe 42 zu optimieren.

Nachfolgend werden entsprechend der Anzahl der erforderlichen Windungen der Spulenwicklung 70 die in Fig. 4 bis 9 gezeigten Verfahrensschritte wiederholt, wobei sich aber die Anordnung der Haltevorrichtungen 18, 20 und 22 ändert und nicht immer der dort gezeigten Position der Haltevorrichtungen entspricht, da diese ihre relative Position nach jedem Durchlauf ändern, wie bereits aus der unterschiedlichen Anordnung in Fig.4 bis 6 einerseits und Fig.7 bis 9 für den Fachmann ohne weiteres ersichtlich ist. Die Abfolge wiederholt sich aber selbstverständlich regelmäßig, so dass mit jedem dritten Wickelvorgang um 180°die Haltevorrichtungen 18, 20, 22 wieder in ihre jeweilige Position zurückkehren.

Alternativ kann das Verfahren auch mit nur zwei Haltevorrichtungen durchgeführt werden, wobei dann die mit dem Dreh-/Wickelvorgang in den dritten Haltebereich verlagerte Haltevorrichtung sogleich wieder in den zweiten Haltebereich zurückbewegt wird, um dort die gerade nachgeführten Drähte 32 vor der Durchführung eines Verschiebevorganges zur Erzeugung eines geneigten Drahtabschnittes 40 zu fixieren.

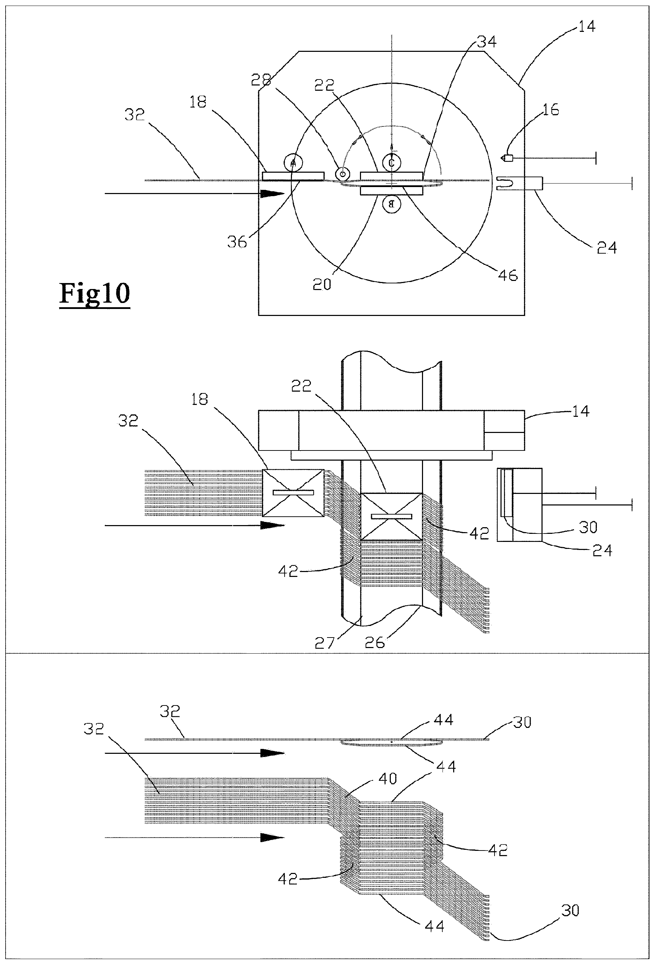

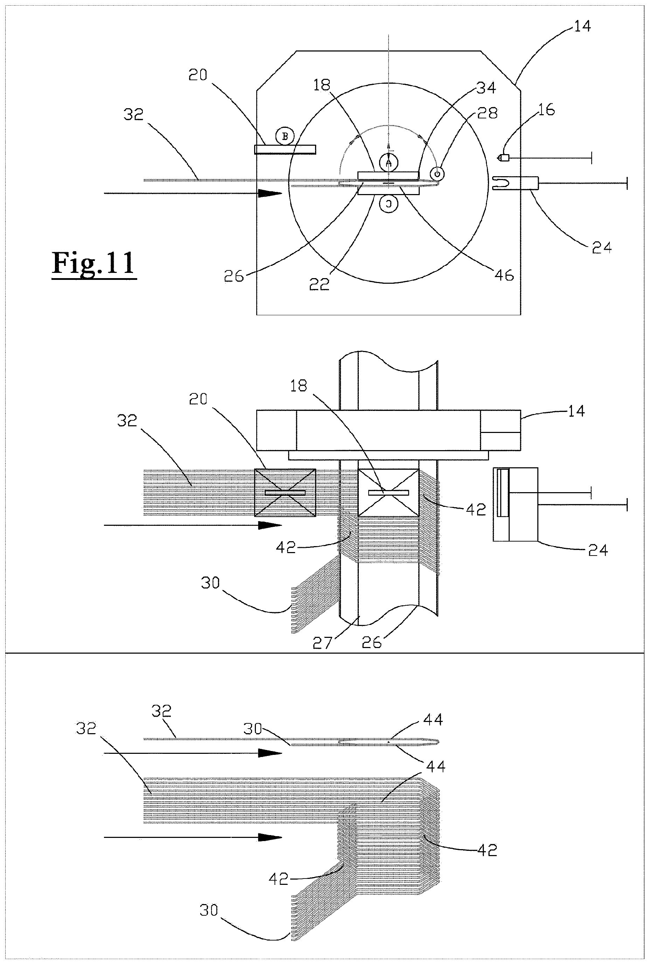

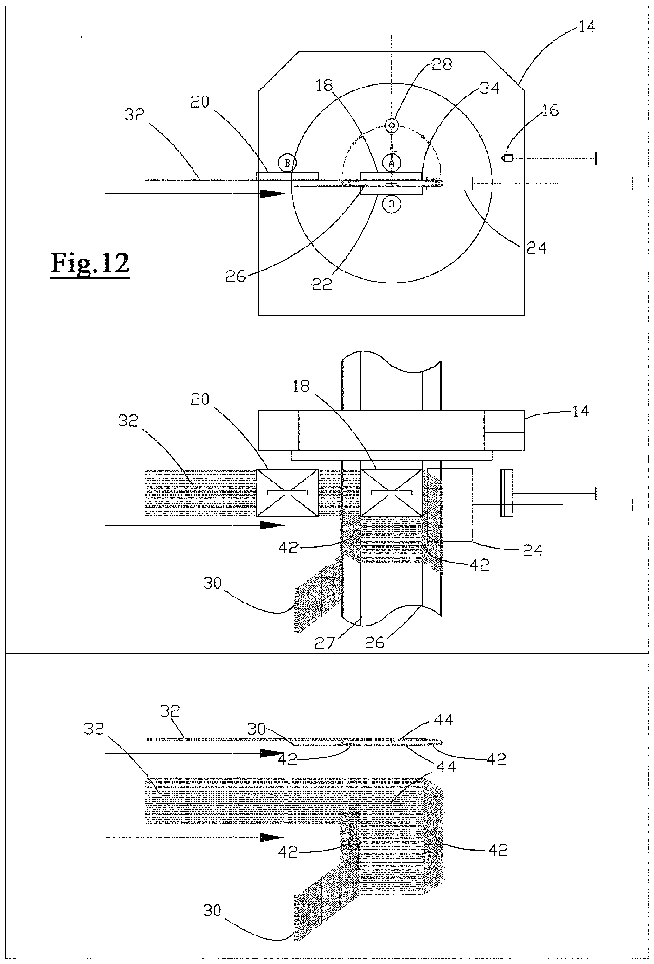

Die abschließenden Verfahrensschritte zum Herstellen der Spulenwicklung, die abweichend von den sich wiederholenden Verfahrensschritten ausgeführt werden, sind in Fig. 10 bis 13 veranschaulicht, wobei die Verfahrensschritte aus Fig. 10 bis 12 noch einmal die Wiederholung der Sequenz aus Verschieben, Drehen/Wickeln und (optionalem) Formen der Wickelköpfe 42 darstellen, wie sie auch in Fig.4 bis 6 und Fig. 7 bis 9 abläuft.

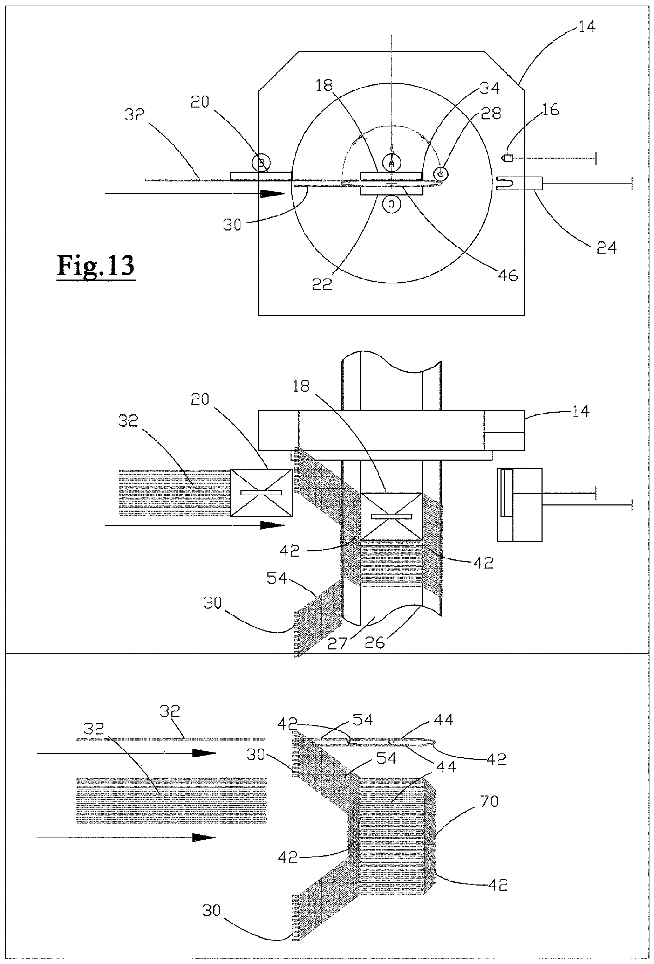

Der finale Schritt zum Herstellen der vollständigen Spulenwicklung 70 ist in Fig.13 gezeigt. Zu diesem Zeitpunkt ist eine Anzahl gerader Schenkel 52 erzeugt worden, die für die Bestückung der Rotor- oder Statornuten gewünscht ist. In Fig.13 ist jedoch der besseren Übersichtlichkeit wegen nur eine verkürzte Spulenwicklung 70 gezeigt. Es ist bei dem gezeigten Ausführungsbeispiel angestrebt, dass alle Anschlussdrähte der fertigen Spulenwicklung 70 auf einer Seite liegen, entsprechend wird der Schritt aus Fig.13 dann durchgeführt, wenn die Drahtanfänge 30 auf der Seite der Drahtzufuhr liegen.

Bevor die fertige Spulenwicklung 70 mittels einer Schneidvorrichtung (nicht gezeigt) vom Drahtvorrat getrennt wird, wird zunächst ein abschließender Verschiebevorgang des ersten Haltebereiches (hier wieder unter Einsatz der verklemmten ersten Haltevorrichtung (A) 18) relativ zum zweiten Haltebereich (hier Haltevorrichtung (B) 20) parallel zur Drehachse der Wickelschablone 26. Nach dem Abschneiden der Drähte bilden die bezüglich der Schenkel 52 geneigten Drähte Drahtenden 54, die ebenso wir die Drahtanfänge 30 als elektrische Anschlüsse für die Spulenwicklung 70 dienen.

Nach dem Abschneiden der Drahtenden 54 vom Drahtvorrat wird die fertige Spulenwicklung 70 dann in an sich bekannter Weise in den Stator oder Rotor übertragen, wobei sie zunächst von der Wickelschablone abgestreift wird und ggf. in einem Zwischenschritt in eine Übertragungsvorrichtung eingelegt wird.

Nicht festgelegt ist das Verfahren insbesondere im Hinblick auf die Anzahl der parallel verarbeiteten Drähte, die im gezeigten und beschriebenen Ausführungsbeispiel mit zwölf angegeben ist. Für ein verteiltes Wellenmuster der Spulenwicklung 70 kann jede beliebige gerade Anzahl von Drähten parallel verarbeitet werden. Für den Fall, dass ein nicht-verteiltes Wellenmuster für eine Wicklung hergestellt werden soll, eignet sich das Verfahren aber praktisch für jede beliebige Anzahl von Drähten. Wie bereits erwähnt, ist das Verfahren insbesondere für die Herstellung von Spulenwicklungen 70 aus Flachdrähten gedacht, die einen rechteckigen Querschnitt aufweisen.

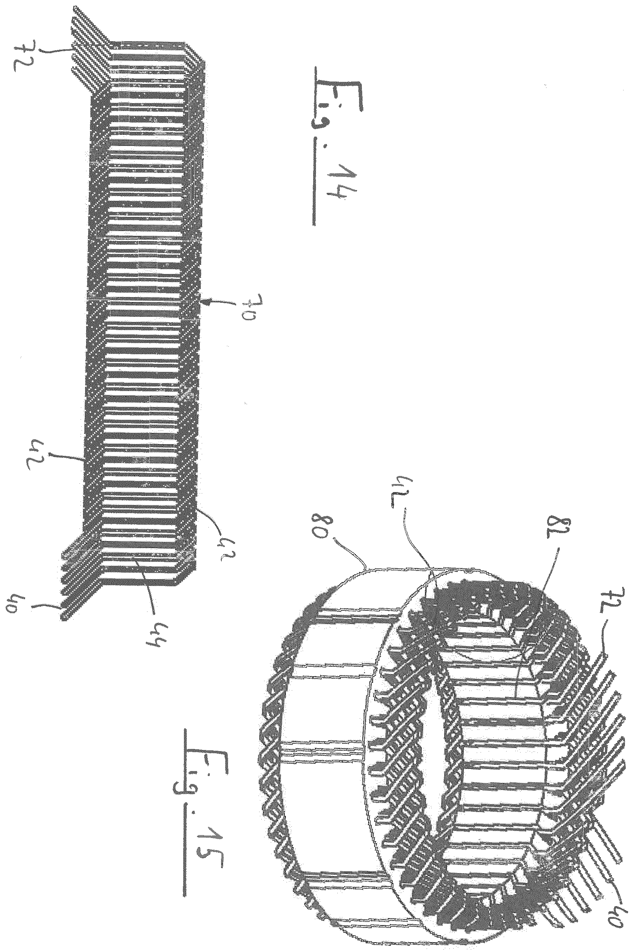

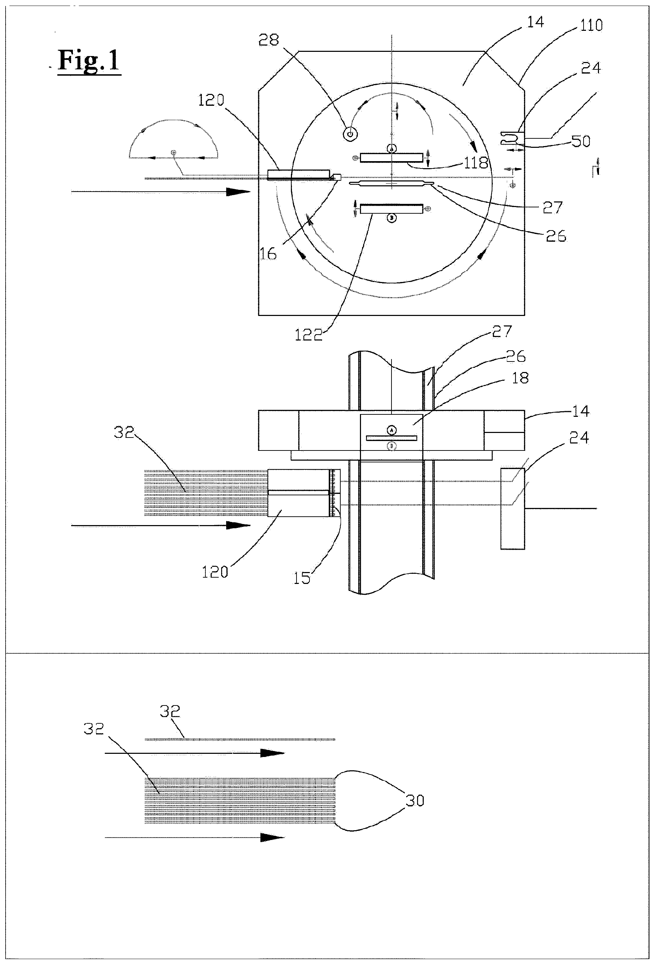

In Fig. 14 ist eine vorgefertigte Wicklung 70 im flachen Zustand gezeigt, wobei diese Lage dem Zustand entspricht, in welchem die Wicklung 70 auf der leistenförmigen Schablone 26 liegt, die aber nicht gezeigt ist. Allerdings handelt es sich bei der dargestellten Wicklung 70 in Fig. 14 nur um eine Wicklung mit jeweils sechs Anschlussdrähten, die durch die Drahtanfänge 30 und die Drahtenden 54 gebildet sind, d. h. in diesem Fall beträgt X 3. An der grundsätzlichen Vorgehensweise bei dem Verfahren ändert sich nichts, lediglich dass nicht zwölf parallele Drähte sondern nur sechs zugeführt werden. Entsprechend vermindert sich der axiale Weg beim Verschieben und Ausbilden der geneigten Übergangsbereiche 42 zwischen den geraden Drahtabschnitten 44.

Fig. 15 zeigt als Beispiel einen Stator 80, in welchen die Wicklung 70 in Statornuten 82 eingelegt ist. Die durch die Drahtanfänge 30 und die Drahtenden 54 gebildeten Anschlussdrähte am Anfang und am Ende der Wicklung liegen auf einer Seite des Stators 80, was ihren Anschluss erleichtert. Bei dem gezeigten Ausführungsbeispiel ist auch zu erkennen, dass die Länge der Statorwicklung 70 ein Mehrfaches des Umfangs des Stators 80 beträgt, beim gezeigten Ausführungsbeispiel die doppelte Länge. Insbesondere bei rechteckförmigen Querschnitten lassen sich mit derart hergestellten Statoren hervorragende Füllungsgrade der Nuten 82 erreichen, so dass die kompakt bauenden Motoren eine hohe Leistungsfähigkeit besitzen. Die durch das Verschieben abgeflachten Wickelköpfe 42 sorgen für einen geringen Materialverbrauch und einen geringen axialen Bauraum des Rotors.

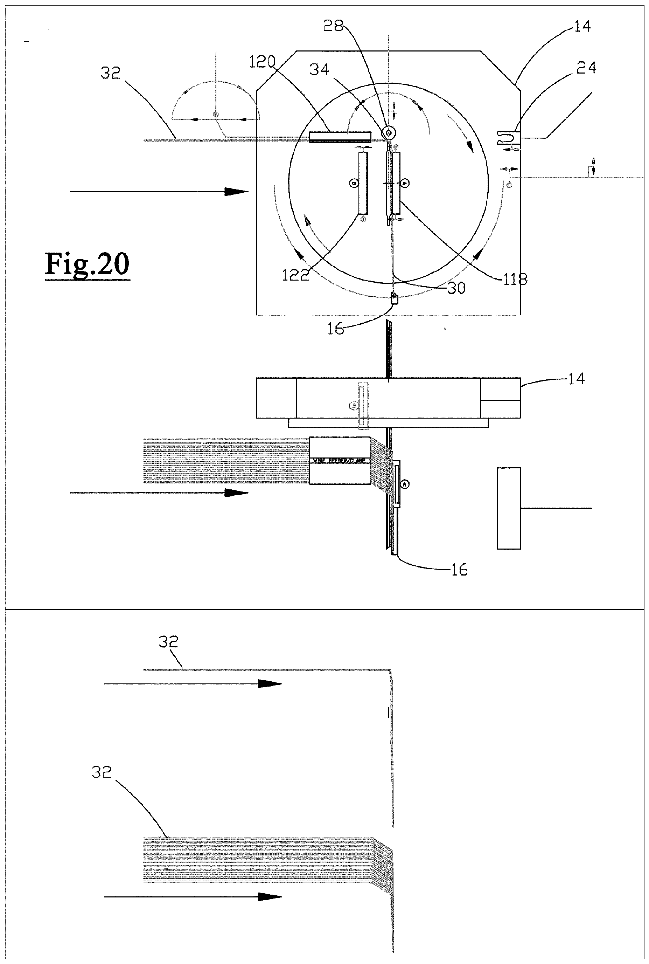

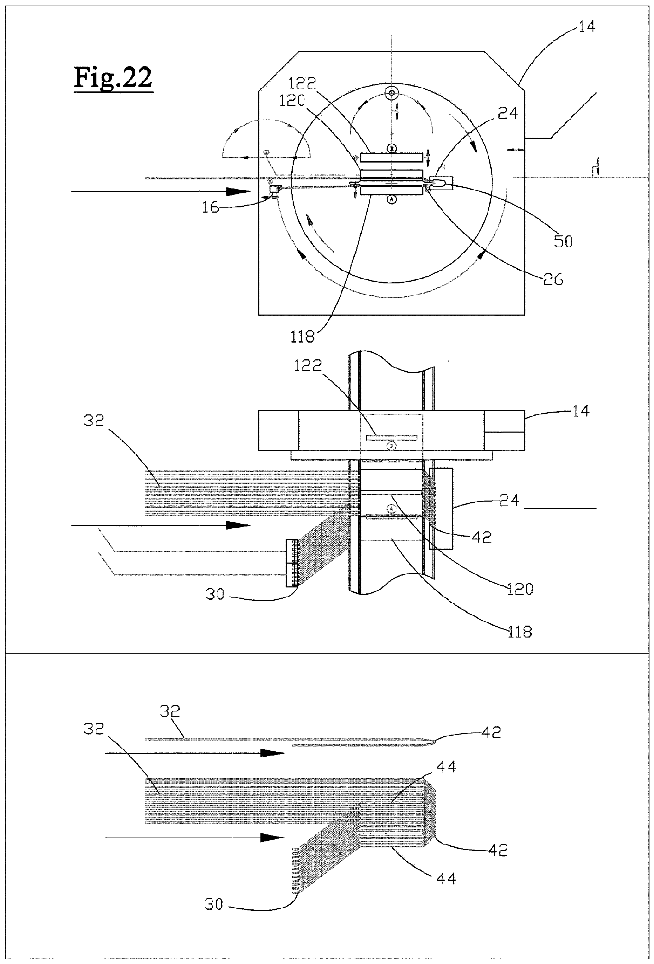

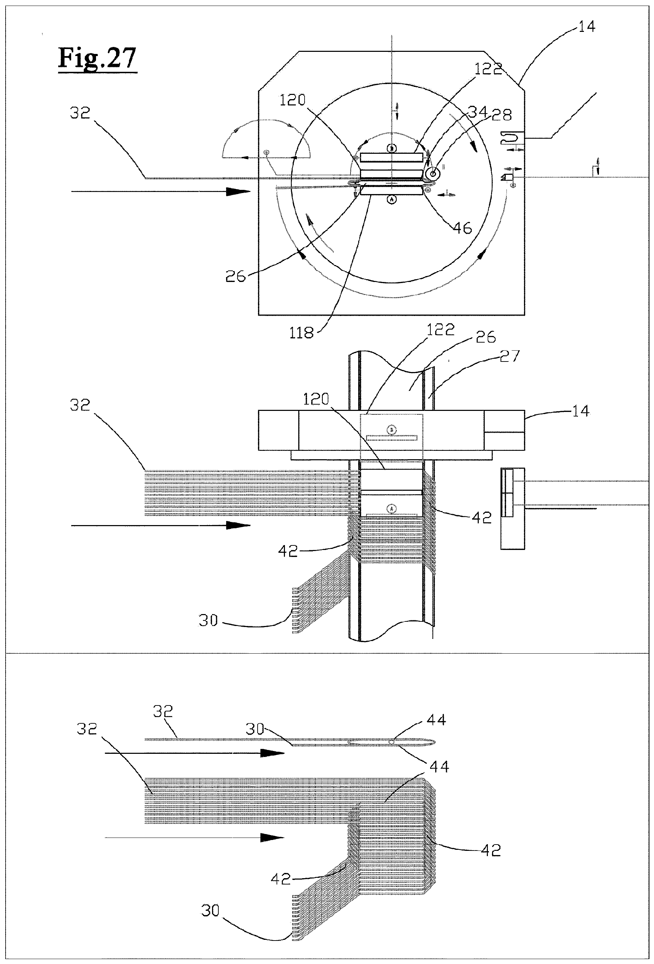

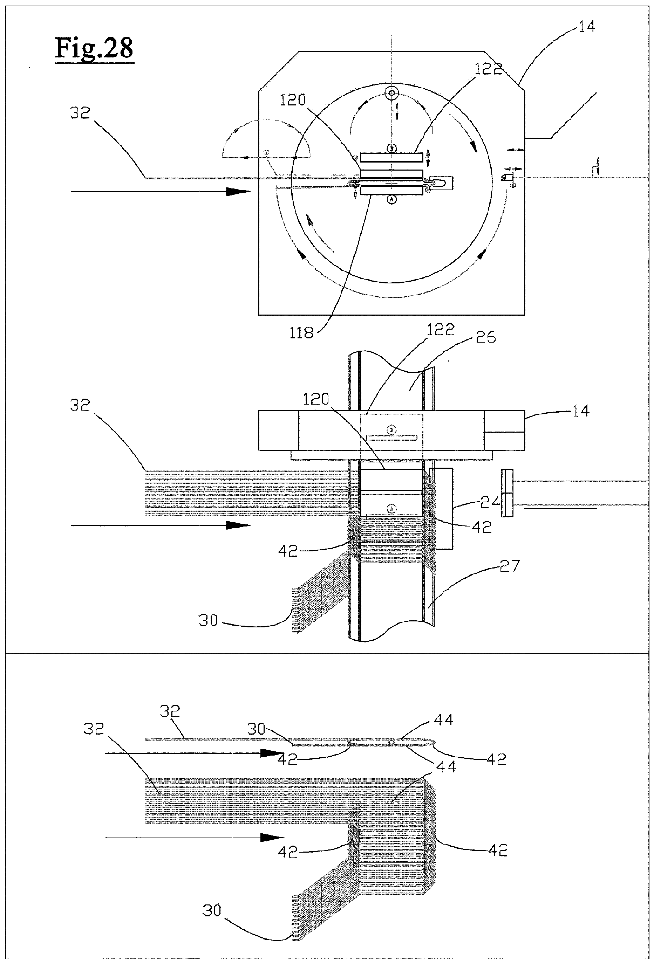

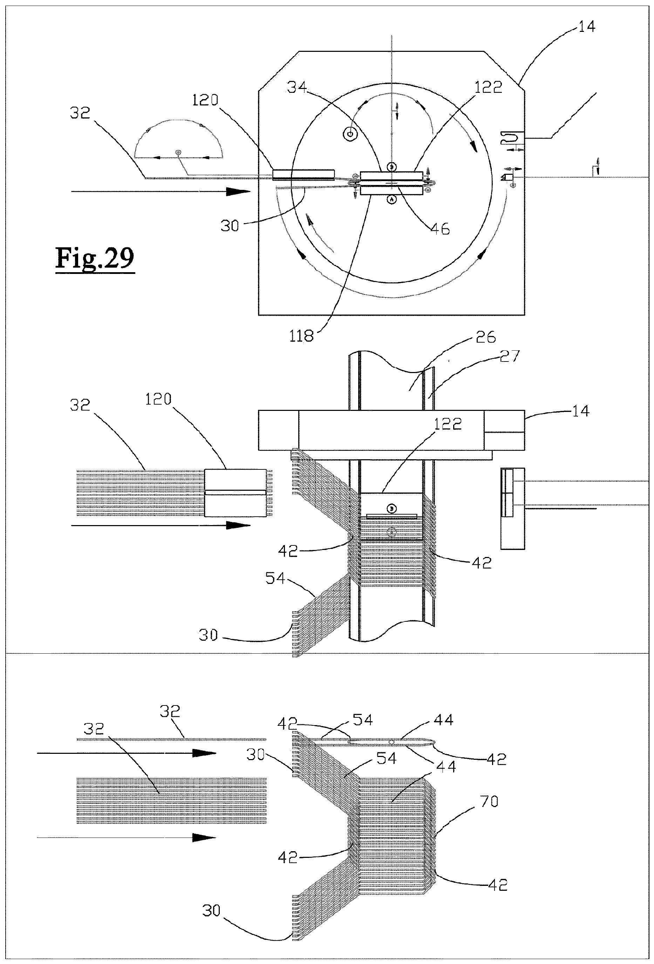

In Fig. 16 bis 29 wird eine Wickelvorrichtung 110 vorgestellt, die eine abweichende Kinematik insbesondere im Hin blick auf die drei Haltevorrichtungen 118, 120 und 122 vorsieht, im Übrigen aber einen im Wesentlichen übereinstimmenden Verfahrensablauf ermöglicht. Die gezeigten einzelnen Schritte entsprechen daher weitestgehend Fig. 1 bis 13 in der gleichen Abfolge, wobei in Fig. 20 ein Zwischenschritt zusätzlich dargestellt worden ist, um die abweichende Kinematik zu veranschaulichen. Da viele Teile der Wickelvorrichtung 110 identisch oder funktional ähnlich zu der zuvor beschriebenen Wickelvorrichtung 10 sind, sind auch die meisten Bezugszeichen identisch belassen worden.

Der wesentliche Unterschied der ab Fig. 16 gezeigten Wickelvorrichtung 110 zu der in Fig. 1 bis 13 vorgestellten Wickelvorrichtung 10 besteht darin, dass nicht drei mehr oder weniger gleich beispielsweise als Klemmvorrichtungen ausgebildete Haltevorrichtungen zum Einsatz kommen, die in einer Art Umlauf nacheinander an allen drei Haltebereichen 34, 36 und 46 zum Einsatz kommen, sondern die erste und die dritte Haltevorrichtung 118 und 122 in Drehrichtung mit dem Wickelkopf 12 gekoppelt sind. Eine Bewegung der ersten und dritten Haltevorrichtung 118 und 122 erfolgt in Bezug auf die Drehachse der Wickelschablone 26 in radialer und axialer Richtung.

Die zweite Haltevorrichtung 120 ist als Drahtlegeeinrichtung ausgebildet und rotiert nicht mit der Wickelschablone 26. Gleichwohl führt die Drahtlegevorrichtung, die auch eine zugfestes Verklemmen der Drähte 32 in ihrem Eingriffsbereich ermöglicht, bei der Zustellbewegung in Richtung der Wickelschablone 26 ein bogenförmige Bewegung aus, um einerseits nicht mit der Wickelschablone zu kollidieren und andererseits den Draht möglichst nah an der Wickelschablone 26 ablegen zu können, während die Rückbewegung linear erfolgt aber nicht erfolgen muss. Hierauf wird im Zusammenhang mit der Beschreibung von Fig. 16 bis 29 noch näher eingegangen, der Bewegungsablauf X ist aber auch in den einzelnen Darstellungen veranschaulicht.

In Fig. 16 ist die dem Verfahrenszustand aus Fig. 1 entsprechende Stellung aller Teile der Wickelvorrichtung 110 gezeigt. Die erste und dritte Haltevorrichtung 118 und 122 befinden sich in einer vollständig in den Wickelkopf 12 zurückgezogenen axialen Ruhestellung, in welcher sie den Raum um die Wickelschablone 26 freigeben, wobei dies nicht unbedingt erforderlich ist, um die zunächst folgenden Verfahrensschritte durchzuführen. Die Drahtlegevorrichtung als zweite Haltevorrichtung 120 befindet sich in einer gelösten Ruhestellung, d.h. die sie durchlaufenden Drahtanfänge 30 sind wiederum nicht mit ihr verklemmt oder in anderer Weise mit ihr fixiert. Auch hier wird als Beispiel wiederum die gleichzeitige Verarbeitung aller Drähte gezeigt, wobei auch eine sukzessive Zuführung der Drähte im Laufe des Verfahrens möglich ist.

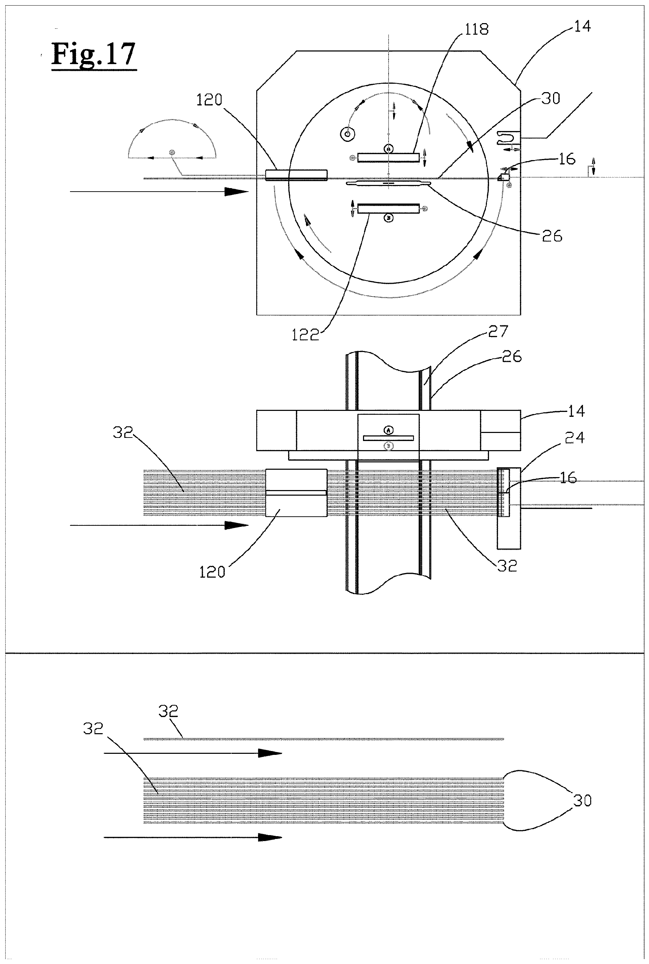

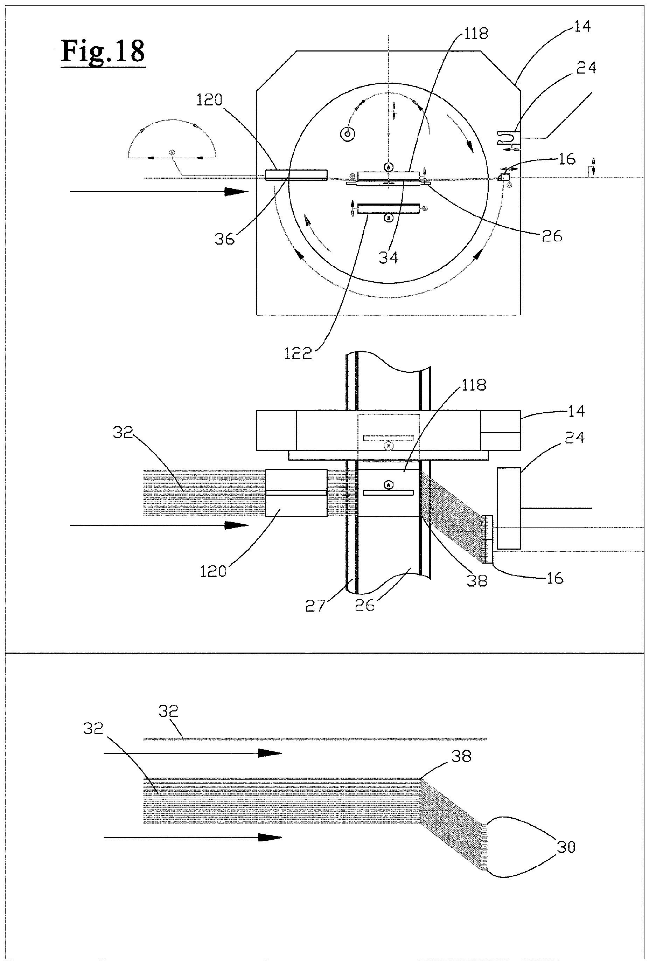

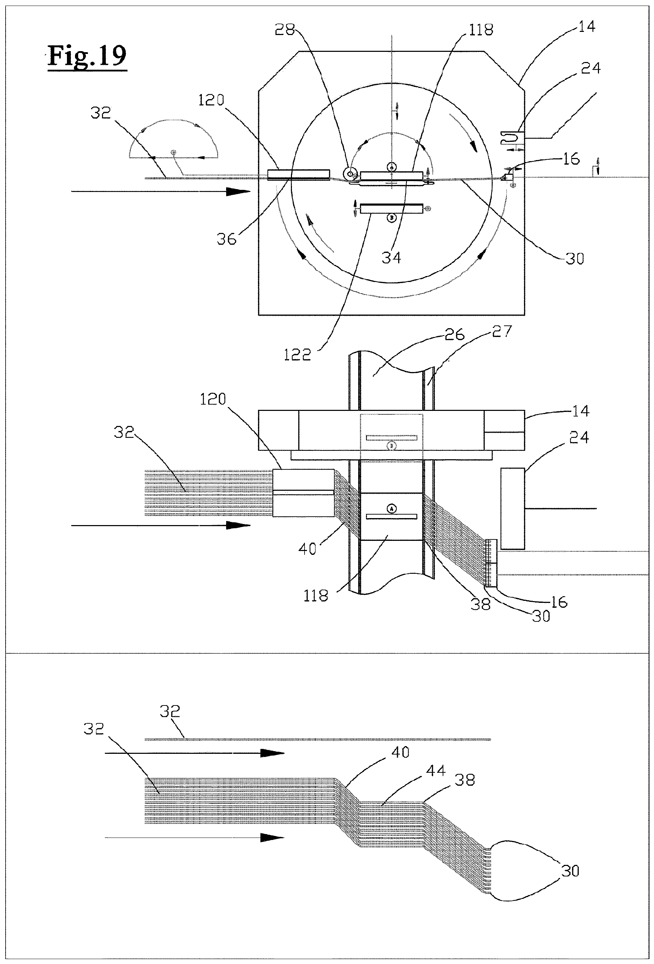

Wie bei der zuvor beschriebenen Ausführungsform zieht ausgehend von Fig. 16 die Drahtzugvorrichtung 16 das parallele Bündel aus Drähten 32 in die in Fig. 17 gezeigte Lage, wo die Drahtanfänge um ein bestimmtes Maß über die Wickelschablone 26 überstehen, wobei sie die Drahtlegevorrichtung passieren. Nachfolgend wird die erste Haltevorrichtung axial oberhalb der Drähte 32 positioniert und anschließend radial zur Wickelschablone 26 hin abgesenkt, so dass die Drähte im Bereich der auszubildenden Schenkel 44 fixiert werden (siehe Fig. 18). Anschließend verfährt die Drahtzugvorrichtung parallel zur Drehachse der Wickelschablone 26 zur Ausbildung der gebogenen Anschlussfahnen der späteren Wicklung 70. Der nächste Schritt zu dem in Fig. 19 gezeigten Zustand besteht wiederum in einem axialen Verschieben der ersten Haltevorrichtung 118 relativ zur zweiten Haltevorrichtung 120, um den geneigten Drahtabschnitt 40 zu erzeugen, wobei der Weg unabhängig der Anzahl der gerade verarbeiteten Drähte gleich der Hälfte der Breite des gesamten Drahtbündels ist.

Zum besseren Verständnis des nachfolgenden Wickelvorganges unter Ausbildung der Wickelköpfe 42, ist in Fig. 20 ein Zwischenschritt gezeigt, in welchem die Wickelschablone 26 erst um 90° gedreht worden ist. Gut zu erkennen ist, dass die erste Haltevorrichtung 118 nach wie vor die Drähte 32 auf der Wickelschablone 26 fixiert, d.h. in der um die halbe Breite axial versetzten Position verharrt. Die Drahtrollvorrichtung 28 sorgt dafür, dass sich die Drähte während der Rotation an die Grundform der Wickelschablone anschmiegen, während die Drahtlegevorrichtung als zweite Haltevorrichtung 120 axial in der gleichen Stellung bleibt und eine während des Drehvorgangs der Wickelschablone 28 bogenförmige Bahn beschreibt, die sich ergibt, wenn die Spitze der Drahtlegevorrichtung der Außenkontur der rotierenden Wickelschablone 26 folgt.

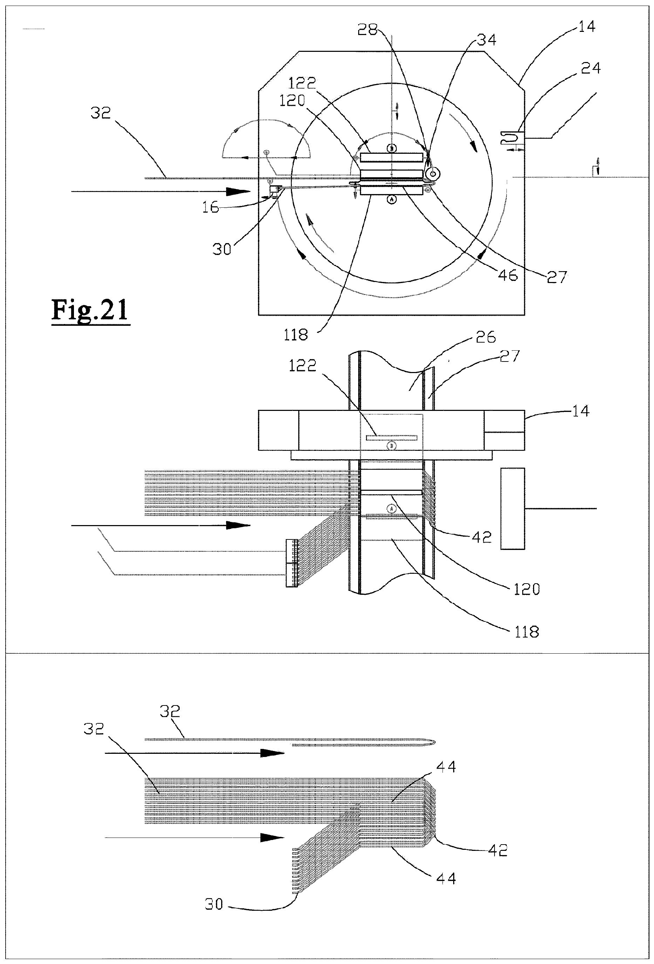

Die dritte Haltevorrichtung 122 befindet sich während des in Fig. 20 und 21 veranschaulichten Rotationsvorgangs in einer axial zurückgezogenen Stellung und kann beispielsweise vollständig in den Wickelkopf zurückgezogen sein. Dadurch weicht sie der sich in der Nähe der Wickelschablone befindlichen Drahtlegevorrichtung und den Drähten 32 aus.

Zu beachten ist noch, dass in Abweichung zur Arbeitsweise der in Fig. 1 bis 13 gezeigten Wickelvorrichtung 10 hier die Drahtzugvorrichtung mit den Drahtenden 30 verklemmt bleibt und entsprechend der Rotationsbewegung der Wickelschablone 26 folgt. Die Drahtzugvorrichtung stabilisiert die Drähte 32 und dient als zusätzliche Unterstützung, dass diese sich unter der Krafteinwirkung während des Wickelns nicht unbeabsichtigt verlagern oder verformen. Diese Maßnahme kann im Übrigen auch ohne weiteres bei der zuvor beschriebenen Wickelvorrichtung 10 eingesetzt werden.

Beim Abschluss des Rotationsvorgangs zur Ausbildung der Wickelköpfe 42 liegt die Drahtlegevorrichtung als zweite Haltevorrichtung 120 auf der bezüglich der ersten Haltevorrichtung 118 entgegengesetzt liegenden Seite der Wickelschablone 26 (siehe Fig. 21) es schließt sich der schon in Fig. 6 gezeigte Formvorgang der Wickelköpfe 42 mittels der Drahtformvorrichtung 24 an, wobei anschließend die Drahtlegevorrichtung von den Drähten 32 gelöst und in die Ausgangsstellung zurückbewegt wird, wo sie die Drähte 32 erneut fixiert, indem sie z.B. mit ihnen verklemmt wird. Die dritte Haltevorrichtung 122 wird zum Fixieren der Drähte 32 in Richtung der Wickelschablone 26 abgesenkt, sobald die Drahtlegevorrichtung (zweite Haltevorrichtung 120) den Raum oberhalb der Wickelschablone 26 freigegeben hat.

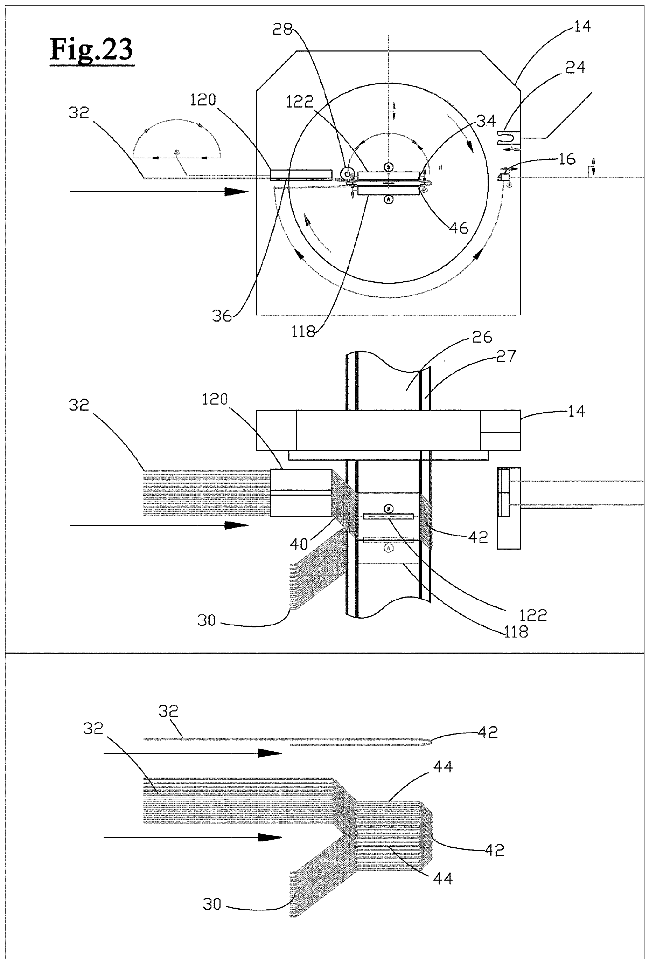

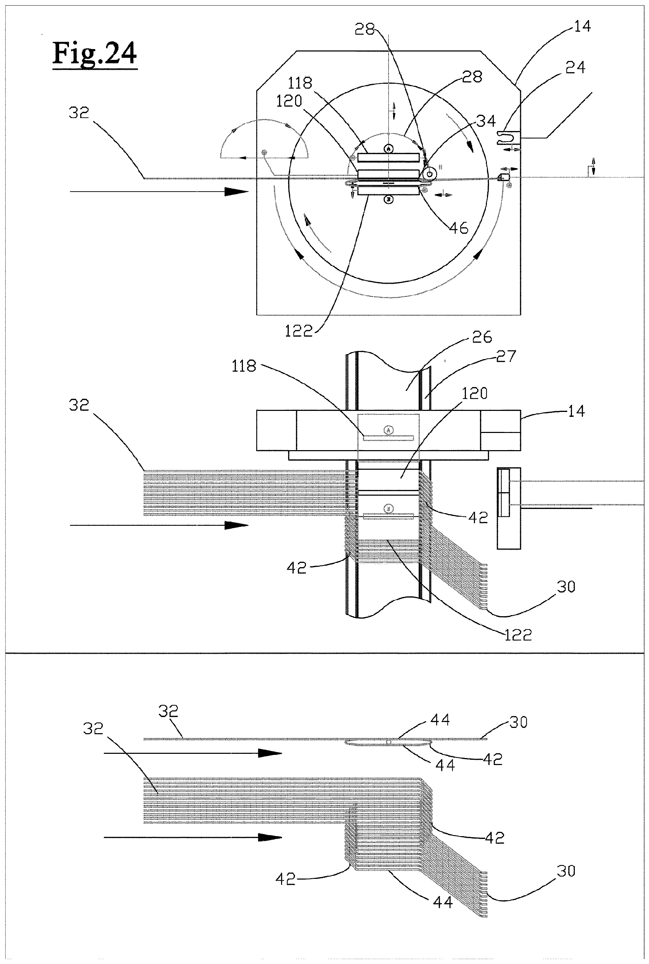

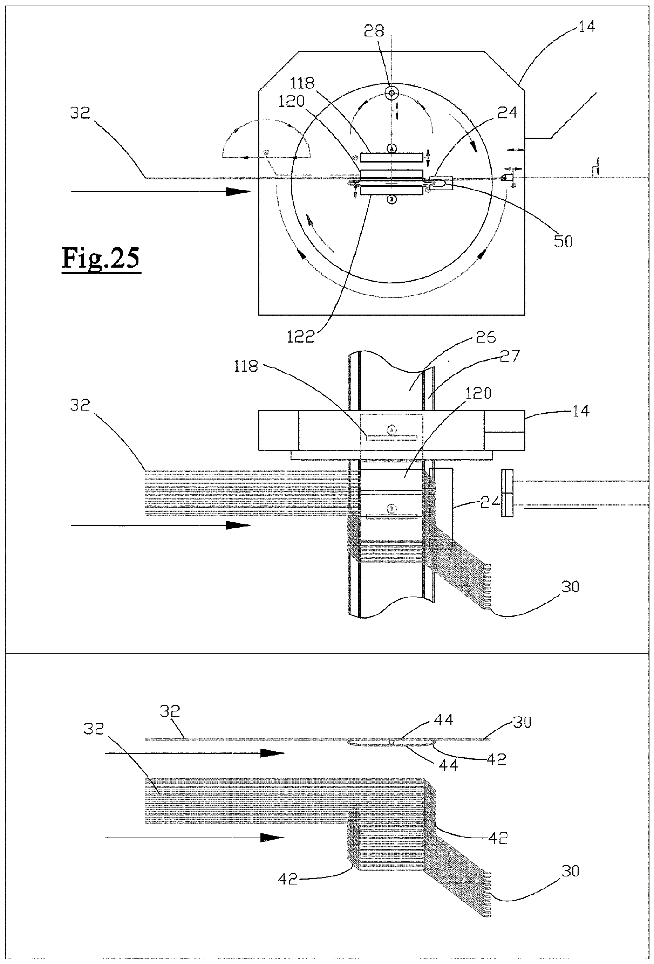

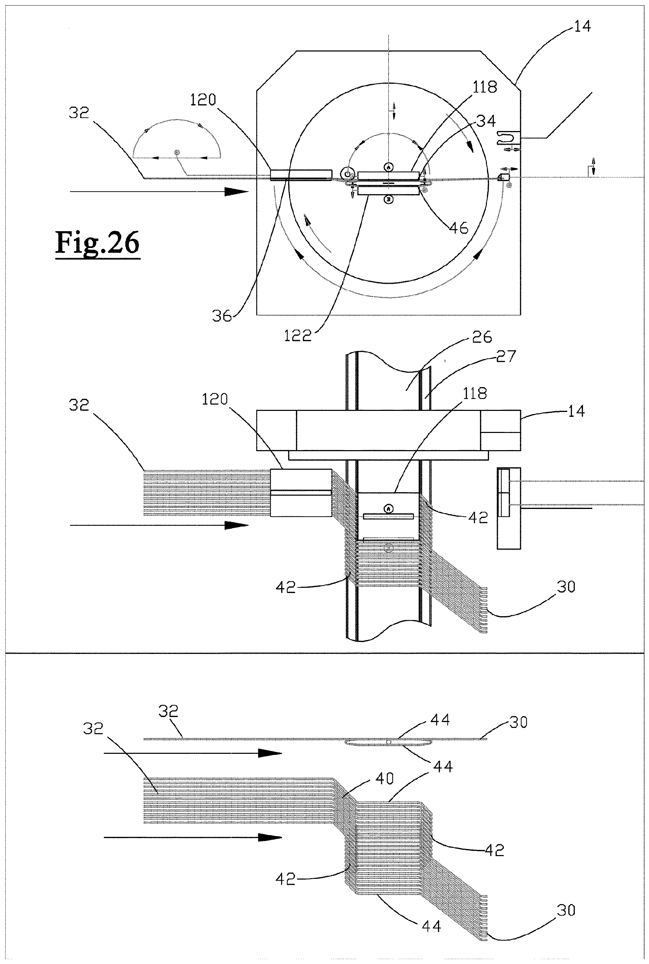

Nun kann der nächste Verschiebeschritt um die halbe Breite des Drahtbündels durchgeführt werden, an dessen Ende sich der in Fig. 23 gezeigte Zustand ergibt, bei dem die Schenkel 44 aus dem ersten Verschiebeschritt gemäß Fig. 19 nun bezogen auf die Drehachse der Wickelschablone 26 axial neben den zugeführten Drähten 32 liegen. Ein weiterer Wickelvorgang gemäß Fig. 24 und ein Drahtformvorgang gemäß Fig. 25 schließen sich an, wobei die Vorgänge des Verschiebens, Wickelns und Formens wiederholt werden, bis die gewünschte Wicklung 70 bis auf die in der Abschlusssequenz gemäß Fig. 26 bis 29 gezeigten Schritte, die den Schritten gemäß Fig. 10 bis 13 entsprechen mit der Maßgabe, dass die Kinematik der Haltevorrichtungen 118, 120 und 122 wie zuvor beschrieben und ab Fig. 16 gezeigt ausgebildet ist.

Wie aus den beiden Ausführungsbeispielen deutlich wird, kann das Verfahren mit unterschiedlichen Vorrichtungen durchgeführt werden. Entsprechend ist die Erfindung nicht auf eine der vorbeschriebenen Ausführungsformen beschränkt, sondern in vielfältiger Weise abwandelbar.

Die obige Beschreibung dient ausschließlich der Erläuterung der vorliegenden Erfindung. Der Schutzumfang soll hingegen ausschließlich durch die beigefügten Ansprüche bestimmt sein.

### Bezugszeichenliste

- 10:: Wickelvorrichtung
- 12:: Wickelkopf
- 14:: Drahthandhabungsvorrichtung
- 16:: Drahtzugvorrichtung
- 18:: erste Haltevorrichtung (A)
- 20:: zweite Haltevorrichtung (B)
- 22:: dritte Haltevorrichtung (C)
- 24:: Wickelkopfformvorrichtung
- 26:: Wickelschablone
- 27:: Randbereich (der Wickelschablone)
- 28:: Drahtrollvorrichtung
- 30:: Drahtanfänge
- 32:: Drähte
- 34:: erster Haltebereich
- 36:: zweiter Haltebereich
- 38:: Knickstelle
- 40:: geneigter Drahtabschnitt
- 42:: Wickelkopf
- 44:: Schenkel
- 46:: dritter Haltebereich
- 48:: Wendestelle
- 50:: Formelement
- 52:: erster Abschnitt paralleler Schenkel
- 54:: Drahtenden
- 70:: Spulenwicklung
- 80:: Stator
- 82:: Statornuten
- 110:: Wickelvorrichtung
- 118:: erste Haltevorrichtung
- 120:: zweite Haltevorrichtung
- 122:: dritte Haltevorrichtung

## Patentansprüche

1. Verfahren zur Herstellung einer Spulenwicklung (70) zum Einlegen in radial offene Nuten (82) von Statoren (80) oder Rotoren elektrischer Maschinen, wobei die Spulenwicklung (70) aus einer Anzahl miteinander verflochtener Drähte (32) besteht, die mehrfach gegenläufig umgebogen werden, so dass parallel zueinander liegende Schenkel (44) der Drähte (32), die zum Ausfüllen der Nuten (82) bestimmt sind, durch Wickelköpfe (42) verbunden sind, die stirnseitig über die Rotoren oder Statoren (80) überstehen, wobei eine flache und drehbare Wickelschablone (26) sowie eine Drahthandhabungsvorrichtung (14) zum Einsatz kommen, wobei folgende Verfahrensschritte vorgesehen sind:
A) Paralleles Zuführen von allen für die Spulenwicklung (70) zum Einsatz kommender Drähte (32) in einer Richtung senkrecht zur Drehachse der Wickelschablone (26);
B) Halten der Drähte (32) an einer Fixierstelle in einem ersten Haltebereich (34) der auszubildenden Schenkel (44) auf der Wickelschablone (26);
C) Halten der Drähte (32) an einer Fixierstelle in einem zweiten Haltebereich (36) in einem Abstand vor der Wickelschablone (26) bezogen auf die Zufuhrrichtung;
D) Vor dem ersten Drehen der Wickelschablone nach Schritt E) erfolgt ein relatives Verschieben des ersten Haltebereiches (34) der Wickelschablone (26) relativ zum zweiten Haltebereich (36) parallel zur Drehachse der Wickelschablone (26) um ein Wegstück, dessen Länge ungefähr gleich oder gleich der Hälfte des Abstands der äußersten Drähte bezogen auf alle Drähte ist, wodurch ein bezüglich der Schenkel (44) geneigter Drahtabschnitt (40) zwischen dem ersten und dem zweiten Haltebereich (34, 36) geformt wird;
E) Nach einem vorangehenden Verschieben gemäß D) erfolgt ein Drehen der Wickelschablone (26) um 180° unter Nachführen der Drähte (32), wobei die Fixierstelle aus dem ersten Haltebereich (34) in einen dritten Haltebereich (46) auf der dem ersten Haltebereich (34) gegenüberliegenden Seite der Wickelschablone (26) und die Fixierstelle aus dem zweiten Haltebereich (36) in den ersten Haltebereich (34) verlagert wird;
F) Fixieren der nachgeführten oder nachträglich zugeführten Drähte (32) an der Fixierstelle im zweiten Haltebereich (36) und an der Fixierstelle im ersten Haltebereich (34);
G) vor oder nach Schritt F) erfolgt ein Lösen der Haltewirkung im dritten Haltebereich (46);
H) Verschieben des ersten Haltebereiches (34) relativ zum zweiten Haltebereich (36) parallel zur Drehachse der Wickelschablone (26) um ein Wegstück, dessen Länge ungefähr gleich oder gleich der Hälfte des Abstandes der äußersten Drähte ist, wodurch ein bezüglich der Schenkel (44) geneigter Drahtabschnitt (40) geformt wird;
I) Drehen der Wickelschablone (26) um 180° unter Nachführen und/oder erstmaligem Zuführen der Drähte (32), wobei wiederum die Fixierstelle im ersten Haltebereich (34) in den dritten Haltebereich (46) auf der dem ersten Haltebereich (34) gegenüberliegenden Seite der Wickelschablone (26) und die Fixierstelle im zweiten Haltebereich (36) in den ersten Haltebereich (34) verlagert wird;
J) Wiederholung der Schritte F) bis I), bis die Spulenwicklung (70) vollständig ist;
K) Letztes relatives Verschieben des ersten Haltebereiches (34) zum zweiten Haltebereich (36) parallel zur Drehachse der Wickelschablone (26) um ein Wegstück, dessen Länge ungefähr gleich oder gleich der Hälfte des Abstandes der äußersten Drähte ist, wodurch ein bezüglich der Schenkel (44) geneigter Drahtabschnitt (40) zwischen dem ersten und dem zweiten Haltebereich (34, 36) geformt wird;
L) Durchtrennen der Drähte (32) im Bereich des zweiten Haltebereiches (36);
M) vollständiges oder teilweises Abstreifen der Spulenwicklung (70) von der Wickelschablone (26).

2. Verfahren nach Anspruch 1, **dadurch gekennzeichnet, dass** alle Drähte (32) von Beginn des Verfahrens an gleichzeitig synchron zugeführt werden.

3. Verfahren nach Anspruch 1, **dadurch gekennzeichnet, dass** zu Beginn des Verfahrens nur ein Teil der Drähte (32) zugeführt werden und die übrigen Drähte dann im Laufe des Verfahrens in das Verfahren eingeführt werden

4. Verfahren nach Anspruch 3, **dadurch gekennzeichnet, dass** die nachfolgend zugeführten Drähte (32) zunächst entsprechende den Schritten B) bis D) zwischen die bereits im Verfahren befindlichen Drähte eingebracht und mit einem geneigten Abschnitt (40) ausgebildet werden, bevor sie mit den Schritten E) oder I) in die sich wiederholenden Verfahrensschritte eingebunden werden.

5. Verfahren nach einem der Ansprüche 1 bis 4, **dadurch gekennzeichnet, dass** im Schritt A), E) oder I) das Zuführen der Drähte (32) mit ihren Drahtenden (30) unter Verwendung einer Drahtzugvorrichtung (16) erfolgt, wobei die Drähte (32) aus einem Drahtvorrat abgezogen werden.

6. Verfahren nach Anspruch 5, **dadurch gekennzeichnet, dass** die freien Drahtenden (30) der gerade zugeführten Drähte (32) des Schrittes B) oder C) mittels der mit den Drahtenden (30) verklemmten Drahtzugvorrichtung (16) in Bezug auf den ersten Haltebereich (34) der Drähte (32) zur Formung der Wicklungsanschlüsse in Richtung der Drehachse der Wickelschablone (26) abgewinkelt werden.

7. Verfahren nach einem der vorhergehenden Ansprüche, **dadurch gekennzeichnet, dass** die Drähte (32) im Schritt B mittels einer ersten Haltevorrichtung (18) und in Schritt C mittels einer zweiten Haltevorrichtung (29) auf der Wickelschablone (26) an den Haltestellen festgehalten werden.

8. Verfahren nach Anspruch 6 oder 7, **dadurch gekennzeichnet, dass** das Formen des ge neigten Drahtabschnittes (40) im Schritt D durch relatives Verlagern der ersten Haltevorrichtung (18) zur zweiten Haltevorrichtung (20) durchgeführt wird.

9. Verfahren nach einem der Ansprüche 6 bis 8, **dadurch gekennzeichnet, dass** mit dem Drehen der Wickelschablone (26) in Schritt E die erste Haltevorrichtung (18) an die Haltestelle des dritten Haltebereiches (46) und die zweite Haltevorrichtung mit den verklemmten Drähten (32) in den ersten Haltebereich (34) verlagert wird, wodurch auch weiterer Draht vom Drahtvorrat abgezogen wird.

10. Verfahren nach einem der vorgehenden Ansprüche, **dadurch gekennzeichnet, dass** die Wickelköpfe (42) im Bereich des durch das Drehen der Wickelschablone (26) zuvor im Schritt E oder I aus dem geneigten Drahtabschnitt (40) ausgebildeten Biegebereiches nachgeformt werden.

11. Verfahren nach Anspruch 10, **dadurch gekennzeichnet, dass** zum endgültigen Formen der Wickelköpfe (42) ein profiliertes Formwerkzeug (50) gegen die Wickelköpfe (42) gepresst wird.

12. Verfahren nach einem der vorhergehenden Ansprüche, **dadurch gekennzeichnet, dass** das Halten der nachgeführten Drähte (32) in Schritt F) unter Verwendung einer dritten Haltevorrichtung (22) durchgeführt wird.

13. Verfahren nach Anspruch 12, **dadurch gekennzeichnet, dass** die erste und dritte Haltevorrichtung (118, 122) in Drehrichtung mit der Wickelschablone (26) gekoppelt sind und wechselweise je nach Drehzustand der Wickelschablone (26) die Drähte (32) im ersten oder dritten Haltebereich (34, 46) fixieren.

14. Verfahren nach Anspruch 13, **dadurch gekennzeichnet, dass** die erste und dritte Haltevorrichtung (118, 122) axial und radial in Bezug auf die Drehachse der Wickelschablone (26) jeweils zwischen Endstellungen bewegt werden.

15. Verfahren nach Anspruch 13 oder 14, **dadurch gekennzeichnet, dass** die Drähte zwischen dem die zweiten und ersten Haltebereich (34, 36) von der zweiten Haltevorrichtung (20) mitgenommen werden, die zwischen diesen Haltebereichen hin und her bewegt wird.

16. Verfahren nach Anspruch 15, **dadurch gekennzeichnet, dass** als zweite Haltevorrichtung (20) eine Drahtverlegeeinrichtung verwendet wird.

17. Verfahren nach Anspruch 12, **dadurch gekennzeichnet, dass** drei Haltevorrichtungen umlaufend zwischen den drei Haltebereichen (34, 36, 46) bewegt werden, wobei mit dem Drehen der Wickelschablone (26) im Schritt I) die dritte Haltevorrichtung (22) an die Fixierstelle des ersten Haltebereiches (34) und die zweite Haltevorrichtung (20) mit den verklemmten Drähten (32) in den ersten Haltebereich (34) verlagert wird, wodurch auch weiterer Draht vom Drahtvorrat abgezogen wird.

18. Verfahren nach einem der vorhergehenden Ansprüche, **dadurch gekennzeichnet, dass** das Durchtrennen der Drähte (32) im Schritt L) in einer Drehstellung der Wickelschablone (26) erfolgt, in welcher die anfänglich zugeführten Drahtanfänge (30) auf der Seite der Wickelschablone liegen, auf der die Drahtzufuhr erfolgt.

19. Verfahren nach einem der vorhergehenden Ansprüche, **dadurch gekennzeichnet, dass** bestimmte Drähte (32) im Laufe des Verfahrens beim Zuführen vor dem Erreichen des zweiten Haltebereiches (36) einmal oder mehrmals paarweise vertauscht werden.

## Claims

1. Method for producing a coil winding (70) for inserting into radially open slots (82) of stators (80) or rotors of electric machines, wherein the coil winding (70) consists of a number of wires (32) which are intertwined with one another and are bent round multiple times in opposite directions so that legs (44) of the wires (32), which lie parallel to one another and are intended for filling out the slots (82), are connected to one another by means of winding heads (42) which protrude at the front end beyond the rotors or stators (80), wherein a flat and rotatable winding template (26) and a wire handling device (14) are used, wherein the following method steps are provided:
A) feed all the wires (32) which are used for the coil winding (70) in parallel in a direction perpendicular to the rotational axis of the winding template (26);
B) hold the wires (32) on the winding template (26) at a fixing point in a first holding region (34) of the legs (44) to be developed;
C) hold the wires (32) at a distance in front of the winding template (26) with reference to the feed direction at a fixing point in a second holding region (36);
D) prior to the first rotation of the winding template after step E), a relative displacement of the first holding region (34) of the winding template (26) is performed relative to the second holding region (36) parallel to the rotational axis of the winding template (26) by a section, the length of which is approximately equal to or equal to half the distance of the outermost wires with reference to all the wires, as a result of which a wire portion (40), which is angled relative to the legs (44), is formed between the first and the second holding regions (34, 36);
E) after a preceding displacement according to D), a rotation of the winding template (26) is performed by 180° thereby adjusting the wires (32), wherein the fixing point from the first holding region (34) is shifted into a third holding region (46) on the side of the winding template (26) located opposite the first holding region (34) and the fixing point from the second holding region (36) is shifted into the first holding region (34);
F) fix the adjusted or subsequently fed wires (32) at the fixing point in the second holding region (36) and at the fixing point in the first holding region (34);
G) a disengagement of the holding action in the third holding region (46) is performed before or after step F);
H) displace the first holding region (34) relative to the second holding region (36) parallel to the rotational axis of the winding template (26) by a section, the length of which is approximately equal to or equal to half the distance of the outermost wires, as a result of which a wire portion (40) which is angled relative to the legs (44) is formed;
I) rotate the winding template (26) by 180° thereby adjusting and/or feeding the wires (32) for the first time, wherein, once again, the fixing point in the first holding region (34) is shifted into the third holding region (46) on the side of the winding template (26) which is located opposite the first holding region (34) and the fixing point in the second holding region (36) is shifted into the first holding region (34);
J) repeat steps F) to I) until the coil winding (70) is complete;
K) relatively displace the first holding region (34) for the last time to the second holding region (36) parallel to the rotational axis of the winding template (26) by a section, the length of which is approximately equal to or equal to half the distance of the outermost wires, as a result of which a wire portion (40) which is angled with reference to the legs (44) is formed between the first and the second holding region (34, 36);
L) sever the wires (32) in the region of the second holding region (36);
M) strip the coil winding (70) from the winding template (26) completely or in part.

2. Method according to claim 1, **characterised in that** all the wires (32) are fed synchronously at the same time from the start of the method.

3. Method according to claim 1, **characterised in that** only a portion of the wires (32) are fed at the start of the method and the remaining wires are then introduced into the method during the course of the method.

4. Method according to claim 3, **characterised in that** the wires (32) fed subsequently are first of all introduced according to steps B) to D) between the wires already in position in the method and are developed with an angled portion (40) before they are incorporated into the repeating method steps with steps E) or I).

5. Method according to any of claims 1 to 4, **characterised in that** in step A), E) or I) the feeding of the wires (32) with their wire ends (30) is performed using a wire drawing device (16), wherein the wires (32) are drawn from a wire stock.

6. Method according to claim 5, **characterised in that** the free wire ends (30) of the wires (32) just fed in step B) or C) are angled in the direction of the rotational axis of the winding template (26) by means of the wire drawing device (16), which is clamped to the wire ends (30), with reference to the first holding region (34) of the wires (32) for forming the winding connections.

7. Method according to any of the preceding claims, **characterised in that** the wires (32) are secured at the holding points on the winding template (26) in step B by means of a first holding device (18) and in step C by means of a second holding device (29).

8. Method according to claim 6 or 7, **characterised in that** the forming of the angled wire portion (40) in step D is carried out as a result of relative displacement of the first holding device (18) to the second holding device (20).

9. Method according to any of claims 6 to 8, **characterised in that** by rotating the winding template (26) in step E, the first holding device (18) is shifted to the holding point of the third holding region (46) and the second holding device with the clamped wires (32) is shifted into the first holding region (34), as a result of which further wire is also drawn from the wire store.

10. Method according to any of the preceding claims, **characterised in that** the winding heads (42) are post-formed in the region of the bending region which was developed previously in step E or I from the angled wire portion (40) as a result of the rotation of the winding template (26).

11. Method according to claim 10, **characterised in that** a profiled forming tool (50) is pressed against the winding heads (42) for the final forming of the winding heads (42).

12. Method according to any of the preceding claims, **characterised in that** the holding of the adjusted wires (32) in step F) is carried out by using a third holding device (22).

13. Method according to claim 12, **characterised in that** the first and third holding devices (118, 122) are coupled to the winding template (26) in the direction of rotation and alternately fix the wires (32) in the first or third holding region (34, 46) depending on the rotational position of the winding template (26).

14. Method according to claim 13, **characterised in that** the first and third holding devices (118, 122) are moved axially and radially between each of the end positions with reference to the rotational axis of the winding template (26).

15. Method according to claim 13 or 14, **characterised in that** the wires between the second and first holding regions (34, 36) are entrained by the second holding device (20) which is moved back and forth between said holding regions.

16. Method according to claim 15, **characterised in that** a wire laying apparatus is used as the second holding device (20).

17. Method according to claim 12, **characterised in that** three holding devices are moved in a circulating manner between the three holding regions (34, 36, 46), wherein with the rotation of the winding template (26) in step I), the third holding device (22) is shifted to the fixing point of the first holding region (34) and the second holding device (20) with the clamped wires (32) is shifted into the first holding region (34), as a result of which further wire is also drawn from the wire store.

18. Method according to any of the preceding claims, **characterised in that** the severing of the wires (32) in step L) is performed in a rotational position of the winding template (26), in which the wire beginnings (30) which are supplied initially are located on the side of the winding template on which the wire feed is performed.

19. Method according to any of the preceding claims, **characterised in that** certain wires (32) are swapped in pairs once or multiple times prior to reaching the second holding region (36) during feeding over the course of the method.

## Revendications

1. Procédé de fabrication d'un enroulement de bobine (70) à insérer dans des rainures (82) radialement ouvertes de stators (80) ou rotors de machines électriques, dans lequel l'enroulement de bobine (70) est constitué d'un nombre de fils (32) entrelacés les uns avec les autres, qui sont repliés en sens inverse à plusieurs reprises, de sorte que des branches (44), situées parallèlement les unes aux autres, des fils (32), qui sont conçues pour remplir les rainures (82), sont reliées par des têtes de bobine (42), qui font saillie frontalement des rotors ou stators (80), dans lequel un gabarit d'enroulement (26) plat et rotatif ainsi qu'un dispositif de manipulation de fil (14) sont utilisés, dans lequel les étapes de procédé suivantes sont prévues :
A) l'amenée parallèle de tous les fils (32) utilisés pour l'enroulement de bobine (70) dans une direction perpendiculaire à l'axe de rotation du gabarit d'enroulement (26) ;
B) la retenue des fils (32) au niveau d'un point de fixation dans une première zone de retenue (34) des branches (44) à réaliser sur le gabarit d'enroulement (26) ;
C) la retenue des fils (32) au niveau d'un point de fixation dans une deuxième zone de retenue (36) à une distance du gabarit d'enroulement (26) par rapport à la direction d'amenée ;
D) avant la première rotation du gabarit d'enroulement après l'étape E), un déplacement relatif de la première zone de retenue (34) du gabarit d'enroulement (26) se produit par rapport à la deuxième zone de retenue (36) parallèlement à l'axe de rotation du gabarit d'enroulement (26) d'une distance d'un tronçon, dont la longueur est approximativement égale ou égale à la moitié de l'écart des fils les plus extérieurs par rapport à tous les fils, ce qui a pour effet qu'une partie de fil (40) inclinée par rapport aux branches (44) est formée entre la première et la deuxième zone de retenue (34, 36) ;
E) après un déplacement précédent selon D), une rotation du gabarit d'enroulement (26) de 180° se produit avec guidage précis des fils (32), dans lequel le point de fixation est déplacé de la première zone de retenue (34) dans une troisième zone de retenue (46) sur la face du gabarit d'enroulement (26) opposée à la première zone de retenue (34) et le point de fixation est déplacé de la deuxième zone de retenue (36) dans la première zone de retenue (34) ;
F) la fixation des fils (32) guidés avec précision ou amenés ultérieurement au niveau du point de fixation dans la deuxième zone de retenue (36) et au niveau du point de fixation dans la première zone de retenue (34) ;
G) avant ou après l'étape F), un desserrage de l'action de retenue dans la troisième zone de retenue (46) se produit ;
H) le déplacement de la première zone de retenue (34) par rapport à la deuxième zone de retenue (36) parallèlement à l'axe de rotation du gabarit d'enroulement (26) d'une distance d'un tronçon, dont la longueur est approximativement égale ou égale à la moitié de l'écart des fils les plus extérieurs, ce qui a pour effet qu'une partie de fil (40) inclinée par rapport aux branches (44) est formée ;
I) la rotation du gabarit d'enroulement (26) de 180° avec guidage précis et/ou première amenée des fils (32), dans lequel le point de fixation dans la première zone de retenue (34) est à nouveau déplacé dans la troisième zone de retenue (46) sur la face du gabarit d'enroulement (26) opposée à la première zone de retenue (34) et le point de fixation dans la deuxième zone de retenue (36) est déplacé dans la première zone de retenue (34) ;
J) la répétition des étapes F) à I), jusqu'à ce que l'enroulement de bobine (70) soit complet ;
K) le dernier déplacement relatif de la première zone de retenue (34) vers la deuxième zone de retenue (36) parallèlement à l'axe de rotation du gabarit d'enroulement (26) d'une distance d'un tronçon, dont la longueur est approximativement égale ou égale à la moitié de l'écart des fils les plus extérieurs, ce qui a pour effet qu'une partie de fil (40) inclinée par rapport aux branches (44) est formée entre la première et la deuxième zone de retenue (34, 36) ;
L) le sectionnement des fils (32) dans la zone de la deuxième zone de retenue (36) ;
M) le retrait complet ou partiel de l'enroulement de bobine (70) du gabarit d'enroulement (26).

2. Procédé selon la revendication 1, **caractérisé en ce que** tous les fils (32) sont amenés de manière simultanément synchrone depuis le début du procédé.

3. Procédé selon la revendication 1, **caractérisé en ce que**, au début du procédé, seule une partie des fils (32) sont amenés et les fils restants sont alors introduits dans le procédé au cours du procédé.

4. Procédé selon la revendication 3, **caractérisé en ce que** les fils (32) amenés par la suite sont tout d'abord introduits conformément aux étapes B) à D) entre les fils déjà situés dans le procédé et sont réalisés avec une partie (40) inclinée, avant d'être intégrés avec les étapes E) ou I) dans les étapes de procédé se répétant.

5. Procédé selon l'une quelconque des revendications 1 à 4, **caractérisé en ce que**, à l'étape A), E) ou I), l'amenée des fils (32) se produit avec leurs extrémités de fil (30) au moyen d'un dispositif de traction de fil (16), dans lequel les fils (32) sont tirés d'un stock de fils.

6. Procédé selon la revendication 5, **caractérisé en ce que** les extrémités de fil (30) libres des fils (32), venant juste d'être amenés, de l'étape B) ou C) sont déroulées au moyen du dispositif de traction de fil (16) serré avec les extrémités de fil (30) par rapport à la première zone de retenue (34) des fils (32) pour la formation des raccords d'enroulement en direction de l'axe de rotation du gabarit d'enroulement (26).

7. Procédé selon l'une quelconque des revendications précédentes, **caractérisé en ce que** les fils (32) sont maintenus à l'étape B au niveau des points de fixation sur le gabarit d'enroulement (26) au moyen d'un premier dispositif de retenue (18) et à l'étape C au moyen d'un deuxième dispositif de retenue (29).

8. Procédé selon la revendication 6 ou 7, **caractérisé en ce que** la formation de la partie de fil (40) inclinée à l'étape D est effectuée par déplacement relatif du premier dispositif de retenue (18) par rapport au deuxième dispositif de retenue (20).

9. Procédé selon l'une quelconque des revendications 6 à 8, **caractérisé en ce que**, avec la rotation du gabarit d'enroulement (26) à l'étape E, le premier dispositif de retenue (18) est déplacé au niveau du point de retenue de la troisième zone de retenue (46) et le deuxième dispositif de retenue, avec les fils (32) serrés, dans la première zone de retenue (34), ce qui a pour effet qu'un autre fil est également tiré du stock de fils.

10. Procédé selon l'une quelconque des revendications précédentes, **caractérisé en ce que** les têtes de bobine (42) dans la zone de la zone de pliage réalisée préalablement à l'étape E ou I à partir de la partie de fil (40) inclinée par la rotation du gabarit d'enroulement (26) sont reproduites.

11. Procédé selon la revendication 10, **caractérisé en ce que**, pour la formation finale des têtes de bobine (42), un outil de formage (50) profilé est pressé contre les têtes de bobine (42).

12. Procédé selon l'une quelconque des revendications précédentes, **caractérisé en ce que** la retenue des fils (32) guidés avec précision à l'étape F) est effectuée au moyen d'un troisième dispositif de retenue (22).

13. Procédé selon la revendication 12, **caractérisé en ce que** les premier et troisième dispositifs de retenue (118, 122) sont accouplés au gabarit d'enroulement (26) dans le sens de rotation et fixent les fils (32) dans la première ou troisième zone de retenue (34, 46) alternativement en fonction de l'état de rotation du gabarit d'enroulement (26).

14. Procédé selon la revendication 13, **caractérisé en ce que** les premier et troisième dispositifs de retenue (118, 122) sont déplacés axialement et radialement par rapport à l'axe de rotation du gabarit d'enroulement (26) respectivement entre des positions finales.

15. Procédé selon la revendication 13 ou 14, **caractérisé en ce que** les fils sont entraînés entre la deuxième et la première zone de retenue (34, 36) par le deuxième dispositif de retenue (20), qui est déplacé en va-et-vient entre ces zones de retenue.

16. Procédé selon la revendication 15, **caractérisé en ce qu'**un appareil de pose de fil est utilisé comme deuxième dispositif de retenue (20).

17. Procédé selon la revendication 12, **caractérisé en ce que** trois dispositifs de retenue sont déplacés de façon rotative entre les trois zones de retenue (34, 36, 46), dans lequel, avec la rotation du gabarit d'enroulement (26) à l'étape I), le troisième dispositif de retenue (22) est déplacé au niveau du point de fixation de la première zone de retenue (34) et le deuxième dispositif de retenue (20) avec les fils (32) serrés dans la première zone de retenue (34), ce qui a pour effet qu'un autre fil est également tiré du stock de fils.

18. Procédé selon l'une quelconque des revendications précédentes, **caractérisé en ce que** le sectionnement des fils (32) à l'étape L) se produit dans une position de rotation du gabarit d'enroulement (26) dans laquelle les débuts de fil (30) amenés au début se situent sur la face du gabarit d'enroulement sur laquelle l'amenée de fil se produit.

19. Procédé selon l'une quelconque des revendications précédentes, **caractérisé en ce que** des fils (32) définis sont échangés par paires à une ou plusieurs reprises au cours du procédé lors de l'amenée avant l'atteinte de la deuxième zone de retenue (36).
